# EUROPEAN PATENT APPLICATION

(11) **EP 4 418 735 A1**
(43) Date of publication of application: **21.08.2024**
(21) Application number: 23157399.9
(22) Date of filing: 17.02.2023
(51) Int. Cl.: H04W 36/00, H04W 36/08

(54) **USER EQUIPMENT AND BASE STATION INVOLVED IN A MOBILITY PROCEDURE**

(71) Applicant: Panasonic Intellectual Property Corporation of America, Torrance, CA 90504 (US)
(72) Inventor: KUANG, Quan, Langen 63225 (DE); SUZUKI, Hidetoshi, 571-8501, Osaka (JP)
(74) Representative: Grünecker Patent- und Rechtsanwälte PartG mbB

(57) **Abstract**

The present disclosure relates to a base station central unit, BS-CU, comprising the following. A transmitter transmits a mobility request to a distributed unit of the base station, mobility-candidate BS-DU, being a candidate for participating in mobility for a user equipment, UE. A receiver of the BS-CU receives, from the mobility-candidate BS-DU, a reference signal, RS, resource configuration of the mobility-candidate BS-DU relating to a candidate cell of the mobility-candidate BS-DU. A processing circuitry of the BS-CU generates an updated list, the updated RS-resource-configuration list having information on the received RS-resource configuration of the mobility-candidate BS-DU and on a RS-resource configuration of at least a serving BS-DU serving the UE. The transmitter transmits content of the updated RS-resource configuration list to the serving BS-DU for further forwarding to the UE.

## Description

### FIELD OF THE PRESENT DISCLOSURE

The present disclosure is directed to methods, devices and articles in communication systems, such as 3GPP communication systems.

### TECHNICAL BACKGROUND

Currently, the 3rd Generation Partnership Project (3GPP) works at the technical specifications for the new radio access technology - 5G NR (New Radio), which is also called fifth generation (5G) or NR and used interchangeably herein.

One objective is to provide a single technical framework addressing all usage scenarios, requirements and deployment scenarios (see e.g., section 6 of 3GPP TR 38.913 e.g., version 16.0.0 or version 17.0.0), at least including enhanced mobile broadband (eMBB), ultra-reliable low-latency communications (URLLC), and massive machine type communication (mMTC). For example, eMBB deployment scenarios may include indoor hotspot, dense urban, rural, urban macro and high speed; URLLC deployment scenarios may include industrial control systems, mobile health care (remote monitoring, diagnosis and treatment), real time control of vehicles, wide area monitoring and control systems for smart grids; mMTC deployment scenarios may include scenarios with large number of devices with non-time critical data transfers such as smart wearables and sensor networks. The services eMBB and URLLC are similar in that they both demand a very broad bandwidth, while they are different in that the URLLC service may preferably require ultra-low latencies.

A second objective is to achieve forward compatibility, which facilitates a completely new system design and/or the introduction of novel features.

### SUMMARY

One non-limiting and exemplary embodiment facilitates for a base station central unit to perform improved mobility procedures.

In an embodiment, the techniques disclosed here feature a base station central unit, BS-CU, comprising the following. A transmitter transmits a mobility request to a distributed unit of the base station, mobility-candidate BS-DU, being a candidate for participating in mobility for a user equipment, UE. A receiver of the BS-CU receives, from the mobility-candidate BS-DU, a reference signal, RS, resource configuration of the mobility-candidate BS-DU relating to a candidate cell of the mobility-candidate BS-DU. A processing circuitry of the BS-CU generates an updated list, the updated RS-resource-configuration list having information on the received RS-resource configuration of the mobility-candidate BS-DU and on a RS-resource configuration of at least a serving BS-DU serving the UE. The transmitter transmits content of the updated RS-resource configuration list to the serving BS-DU for further forwarding to the UE.

One non-limiting and exemplary embodiment facilitates for a UE to perform improved mobility procedures. In an embodiment, the techniques disclosed here feature a user equipment, UE, comprising the following. A receiver receives, from a distributed unit of a base station serving the UE, serving BS-DU, a communication configuration of a BS-DU being a candidate for participating in mobility of the UE. A processing circuity of the UE decodes the received mobility-candidate-BS-DU communication configuration to obtain a reference signal, RS, resource configuration of the mobility-candidate BS-DU relating to a candidate cell of the mobility-candidate BS-DU. The processing circuitry updates a current list having information on an RS-resource configuration of at least the serving BS-DU, based on the decoded RS-resource configuration of the mobility-candidate BS-DU.

Additional benefits and advantages of the disclosed embodiments and different implementations will be apparent from the specification and figures. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system to which the improved procedures of the present disclosure may be applied;
- **Fig. 2**: is a schematic drawing that shows a functional split between NG Radio Access Network (NG-RAN) and 5G Core Network (5GC), to which the improved procedures of the present disclosure may be applied,
- **Fig. 3**: is a sequence diagram for Radio Resource Control (RRC) connection setup/reconfiguration procedures to which the improved procedures of the present disclosure may be applied,
- **Fig. 4**: is a schematic drawing showing usage scenarios of eMBB, mMTC and URLLC to which the improved procedures of the present disclosure may be applied,
- **Fig. 5**: is a block diagram showing an exemplary 3GPP NR system architecture for a non-roaming scenario,
- **Fig. 6**: illustrates a split-gNB architecture, where a gNB is split into a gNB-central unit and one or more gNB-distributed units,
- **Fig. 7**: illustrates a simplified and exemplary implementation of a set of synchronization signal blocks distributed in a half-frame,
- **Fig. 8**: illustrates several beams and the corresponding SSB index, SSB1-SSB8, and how the beams are transmitted by the gNB in a beam-sweeping manner,
- **Fig. 9**: illustrates a simplified signaling diagram for an intra-DU lower-layer cell switch,
- **Fig. 10**: illustrates an exemplary and simplified structure of a UE and a gNB,
- **Fig. 11**: illustrates an example for a basic mobility procedures and the cell-switch preparation for which the various solutions and variants will be applied,
- **Fig. 12**: illustrates a structure of the base station central unit according to an exemplary implementation of the First Solution of the improved mobility procedure,
- **Fig. 13**: illustrates a flow diagram for the behaviour of the BS-CU according to an exemplary implementation of the First Solution of the improved mobility procedure,
- **Fig. 14**: illustrates a signaling diagram of an exemplary and simplified implementation of the improved mobility procedure according to the First Solution,
- **Fig. 15**: illustrates a further signaling diagram for a First Variant of the First Solution of the improved mobility procedure,
- **Fig. 16**: illustrates a further signaling diagram for the First Variant of the First Solution of the improved mobility procedure, for a scenario including a second candidate gNB-DU-2,
- **Fig. 17**: illustrates a further signaling diagram for a Second Variant of the First Solution of the improved mobility procedure,
- **Fig. 18**: illustrates a structure of the UE according to an exemplary implementation of the Second Solution of the improved mobility procedure,
- **Fig. 19**: illustrates a flow diagram for the UE behavior according to an exemplary implementation of the Second Solution of the improved mobility procedure,
- **Fig. 20**: illustrates a signaling diagram of an exemplary and simplified implementation of the Second Solution of the improved mobility procedure, and
- **Fig. 21**: illustrates a further more detailed signaling diagram of an exemplary and simplified implementation of the Second Solution of the improved mobility procedure.

### DETAILED DESCRIPTION

### 5G NR system architecture and protocol stacks

3GPP has been working at the next release for the 5^{th} generation cellular technology, simply called 5G, including the development of a new radio access technology operating in frequencies ranging up to 100 GHz. The first version of the 5G standard was completed at the end of 2017, which allows proceeding to 5G NR standard-compliant trials and commercial deployments of smartphones.

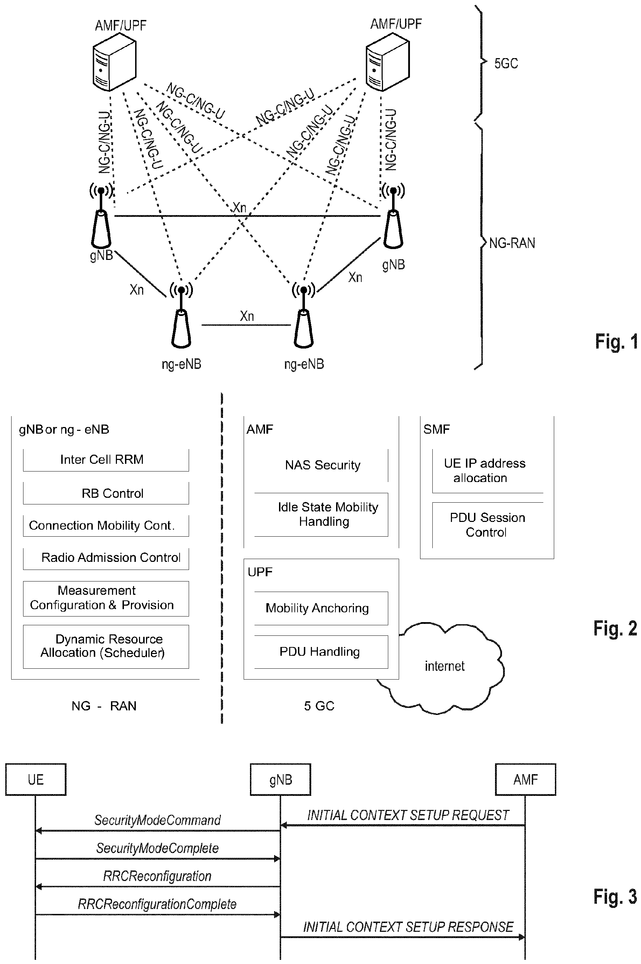

Among other things, the overall system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the 5GC, more specifically to the AMF (Access and Mobility Management Function) (e.g., a particular core entity performing the AMF) by means of the NG-C interface and to the UPF (User Plane Function) (e.g., a particular core entity performing the UPF) by means of the NG-U interface. The NG-RAN architecture is illustrated in **Fig. 1** (see e.g., 3GPP TS 38.300 e.g., v17.2.0, section 4).

The user plane protocol stack for NR (see e.g., 3GPP TS 38.300, section 4.4.1) comprises the PDCP (Packet Data Convergence Protocol, see section 6.4 of 3GPP TS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SOAP, Service Data Adaptation Protocol) is introduced above PDCP (see e.g., sub-clause 6.5 of TS 38.300). A control plane protocol stack is also defined for NR (see for instance TS 38.300, section 4.4.2). An overview of the Layer 2 functions is given in sub-clause 6 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH (Physical Uplink Shared Channel) and PUCCH (Physical Uplink Control Channel) for uplink and PDSCH (Physical Downlink Shared Channel), PDCCH (Physical Downlink Control Channel) and PBCH (Physical Broadcast Channel) for downlink.

Use cases / deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability (1-10⁻⁵ within 1ms). Finally, mMTC may preferably require high connection density (1,000,000 devices/km² in an urban environment), large coverage in harsh environments, and extremely long-life battery for low cost devices (15 years).

Therefore, the OFDM numerology (e.g., subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15 kHz, 30 kHz, 60 kHz... are being considered at the moment. The symbol duration Tᵤ and the subcarrier spacing Δf are directly related through the formula Δf = 1 / Tᵤ. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 e.g., v17.4.0, e.g., section 4). For instance, downlink and uplink transmissions are organized into frames with 10ms duration, each frame consisting of ten subframes of respectively 1ms duration. In 5g NR implementations the number of consecutive OFDM symbols per subframe depends on the subcarrier-spacing configuration. For example, for a 15-kHz subcarrier spacing, a subframe has 14 OFDM symbols (similar to an LTE-conformant implementation, assuming a normal cyclic prefix). On the other hand, for a 30-kHz subcarrier spacing, a subframe has two slots, each slot comprising 14 OFDM symbols.

### 5G NR functional split between NG-RAN and 5GC

**Fig. 2** illustrates functional split between NG-RAN and 5GC. NG-RAN logical node is a gNB or ng-eNB. The 5GC has logical nodes AMF, UPF and SMF.

In particular, the gNB and ng-eNB host the following main functions:
- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;
- Connection setup and release;
- Scheduling and transmission of paging messages;
- Scheduling and transmission of system broadcast information (originated from the AMF or OAM);
- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS messages;
- Radio access network sharing;
- Dual Connectivity;
- Tight interworking between NR and E-UTRA.

The Access and Mobility Management Function (AMF) hosts the following main functions:
- Non-Access Stratum, NAS, signalling termination;
- NAS signalling security;
- Access Stratum, AS, Security control;
- Inter Core Network, CN, node signalling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network Slicing;
- Session Management Function, SMF, selection.

Furthermore, the User Plane Function, UPF, hosts the following main functions:
- Anchor point for Intra-/Inter-RAT mobility (when applicable);
- External PDU session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g., packet filtering, gating, UUDL rate enforcement;
- Uplink Traffic verification (SDF to QoS flow mapping);
- Downlink packet buffering and downlink data notification triggering.

Finally, the Session Management function, SMF, hosts the following main functions:
- Session Management;
- UE IP address allocation and management;
- Selection and control of UP function;
- Configures traffic steering at User Plane Function, UPF, to route traffic to proper destination;
- Control part of policy enforcement and QoS;
- Downlink Data Notification.

### RRC connection setup and reconfiguration procedures

**Fig. 3** illustrates some interactions between a UE, gNB, and AMF (a 5GC entity) in the context of a transition of the UE from RRC_IDLE to RRC_CONNECTED for the NAS part (see 3GPP TS 38.300).

RRC is a higher layer signaling (protocol) used for UE and gNB configuration. In particular, this transition may involve that the AMF prepares the UE context data (including e.g., PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5GC is provided that comprises circuitry which, in operation, establishes a Next Generation (NG) connection with a gNodeB; and a transmitter which, in operation, transmits an initial context setup message, via the NG connection, to the gNodeB to cause a signaling radio bearer setup between the gNodeB and a user equipment (UE). In particular, the gNodeB transmits an RRC signaling containing a resource allocation configuration information element (IE) to the UE via the signaling radio bearer. The UE then performs an uplink transmission or a downlink reception based on the resource allocation configuration.

### Usage Scenarios of IMT for 2020 and beyond

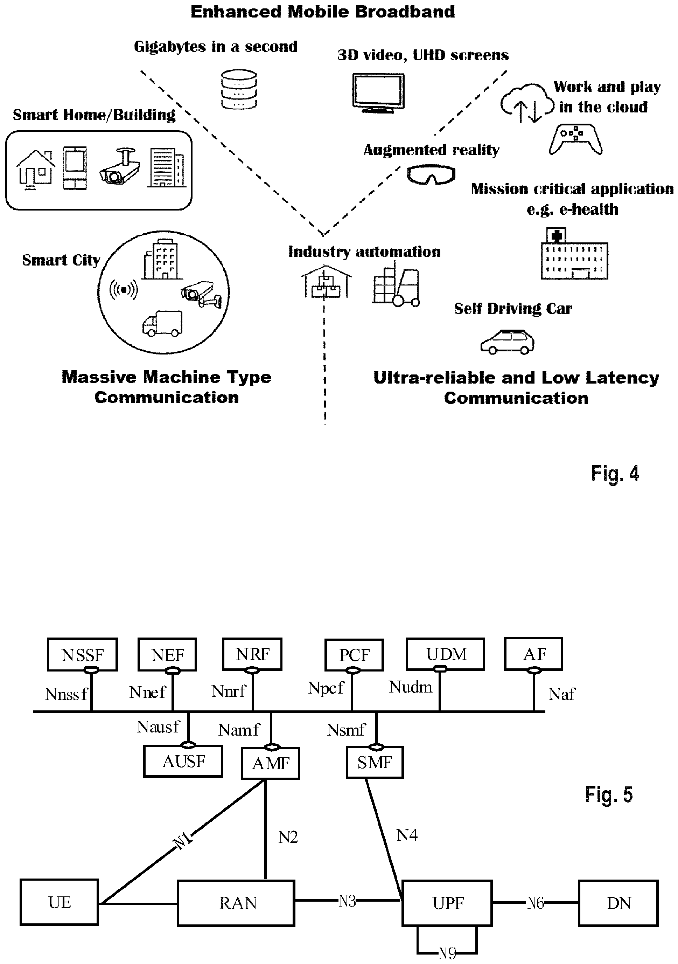

**Fig. 4** illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications. Fig. 4 illustrates some examples of envisioned usage scenarios for IMT for 2020 and beyond (see e.g., ITU-R M.20183 Fig. 2).

The URLLC use case has stringent requirements for capabilities such as throughput, latency and availability and has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by 3GPP TR 38.913. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1ms.

From the physical layer perspective, reliability can be improved in a number of possible ways. The current scope for improving the reliability involves defining separate CQI tables for URLLC, more compact DCI formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution, including factory automation, transport industry, and electrical power distribution. The tighter requirements are higher reliability (up to 10⁶ level), higher availability, packet sizes of up to 256 bytes, time synchronization down to the order of a few µs where the value can be one or a few µs depending on frequency range and short latency in the order of 0.5 to 1 ms in particular a target user plane latency of 0.5 ms, depending on the use cases.

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also, PUSCH enhancements related to mini-slot level hopping and retransmission/repetition enhancements have been identified. The term "mini-slot" refers to a Transmission Time Interval (TTI) including a smaller number of symbols than a slot (a slot comprising fourteen symbols).

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g., as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

**Fig. 5** illustrates a 5G NR non-roaming reference architecture (see e.g., 3GPP TS 23.501 e.g., v16.9.0, section 4.2.3, see also v17.5.0 or v18.0.0). An Application Function (AF), e.g., an external application server hosting 5G services, exemplarily described in Fig. 4, interacts with the 3GPP Core Network in order to provide services, for example to support application influence on traffic routing, accessing Network Exposure Function (NEF) or interacting with the Policy framework for policy control (see Policy Control Function, PCF), e.g., QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

Fig. 5 shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g., operator services, Internet access or 3rd party services. All of or a part of the core network functions and the application services may be deployed and running on cloud computing environments.

In the present disclosure, thus, an application server (for example, AF of the 5G architecture), is provided that comprises a transmitter, which, in operation, transmits a request containing a QoS requirement for at least one of URLLC, eMBB and mMTC services to at least one of functions (for example NEF, AMF, SMF, PCF,UPF, etc.) of the 5GC to establish a PDU session including a radio bearer between a gNodeB and a UE in accordance with the QoS requirement and circuitry, which, in operation, performs the services using the established PDU session.

### Transmission Configuration Indicator states and Quasi-Co-Location

As per 3GPP TS 38.214: "Physical layer procedures for data (Release 17)", v. 17.3.0, September 2022, two reference signals can have a quasi-co-located, QCL, relationship. Two antenna ports are said to be quasi co-located if properties of the channel over which a symbol on one antenna port is conveyed can be inferred from the channel over which a symbol on the other antenna port is conveyed.

In 5G NR systems, a transmission configuration indication (TCI) state is used to establish the quasi co-location (QCL) connection between a target reference signal (RS) and a source RS. The antenna ports QCL types are defined below:

| Type | Description |
|---|---|
| QCL-TypeA | Doppler shift, Doppler spread, average delay, delay spread |
| QCL-TypeB | Doppler shift, Doppler spread |
| QCL-TypeC | Doppler shift, average delay |
| QCL-TypeD | Spatial Rx parameter |

TCI states are configured for PDCCH, PDSCH and channel state information reference signals (CSI-RS) in order to convey the QCL indication for the respective RS. In frequency range 1 (FR1, below 7.125 GHz) QCL Types A-C and in frequency range 2 (FR2, above 24.250 GHz) QCL types A-D are applicable. The QCL Type D for FR2 indicates that PDCCH/PDSCH/CSI-RS is transmitted with the same spatial filter as the reference signal associated with that TCI. In FR2, the network can indicate a transmit beam change for PDSCH or PDCCH by switching the TCI state.

Each TCI state can include a TCI state identifier, TCI state ID, and a RS set, or one or more individual RS(s), which are used for QCL reference. Each RS within a TCI state can be associated with a set of one or more Tx (transmit) and/or Rx (receive) beams.

### Split gNB architecture

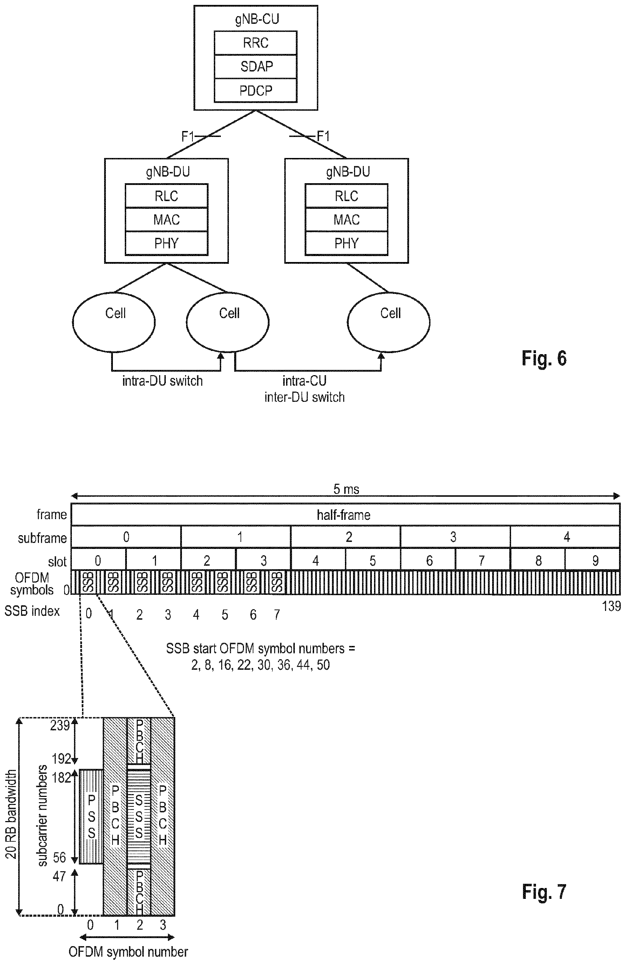

In the 3GPP standard, a gNB can be split into a gNB-CU (Central Unit) and one or more gNB-DUs (Distributed Units). This is illustrated in Fig. 6.

The gNB-CU is a logical node that provides support for the higher layers of the protocol stack such as SOAP, PDCP and RRC. On the other hand, the gNB-DU is a logical node that provides support for the lower layers of the protocol stack such as RLC, MAC and Physical layer. Also, note that SDAP layer will not be present if the CU is connected to a 4G Core network as we should have 5G core network to support SOAP.

Therefore, the PHY and MAC layers are terminated at the gNB-DU, while Layer 3 (RRC) is terminated at the gNB-CU.

There is a single CU for each gNB, i.e. one gNB-DU is connected to only one gNB-CU. Alternatively, for resiliency, a gNB-DU may be connected to multiple gNB-CUs. One gNB-CU may control multiple gNB-DUs, for example more than 100 gNB-DUs can be connected to one gNB-CU. Each gNB-DU is able to support one or more cells, so one gNB can control hundreds of cells unlike the 4G BTS. One cell is supported by only one gNB-DU.

Also, note that the interface between CU and DU is named F1 and as per 3GPP, it should be an open interface. For NG-RAN, the NG and Xn-C interfaces for a gNB consisting of a gNB-CU and gNB-DUs, terminate in the gNB-CU. For EN-DC, the S1-U and X2-C interfaces for a gNB consisting of a gNB-CU and gNB-DUs, terminate in the gNB-CU. The gNB-CU and connected gNB-DUs are only visible to other gNBs and the 5GC as a gNB.

The gNB-CU/DU architecture is specified in more detail e.g. in 3GPP TS 38.401 v17.3.0, e.g. section 6.1. The F1 interface is specified in more detail e.g. in 3GPP TS 38.473 v17.3.0.

### Synchronization Signal Block measurement timing configuration - SMTC - PSS/SSS, PBCH

NR has introduced the so-called synchronization signal block, SS block (SSB), which comprises a Primary Synchronization Signal (PSS), a Secondary Synchronization Signal (SSS), and a Physical Broadcast CHannel (PBCH) (in fact PBCH DMRS and PBCH data). The PSS and SSS can be used by UEs to find, synchronize to and identify a network. The PBCH carries a minimum amount of system information including an indication where the remaining broadcast system information is transmitted.

In LTE, these three signals were also used, the PSS, SSS, and PBCH, although not as being part of one SSB. The three SSB components are always transmitted together in NR, e.g. they have the same periodicity. A given SSB may be repeated within an SS burst set, which can be potentially used for a gNB beam-sweeping transmission. The SS burst set may be confined to a particular time period, such as a 5ms window (half-frame). For initial cell selection, the UE may assume a default SS burst set periodicity of 20 ms.

The 5G NR PSS is a Physical Layer specific signal to identify the radio frame boundary and is type of an m-sequence. The 5G NR SSS is also a Physical-Layer specific signal to identify the subframe boundary and is also an m-sequence. The PSS/SSS sequence is composed of complex values used by each element/sample of the sequence. Information on the current exemplary 5G implementation of the PSS and SSS is available from 3GPP TS 38.211 v17.4.0 sections 7.4.2.2 and 7.4.2.3, including the respective sequence generation and mapping to physical resources.

The time-frequency structure of an SS/PBCH block, carrying the SSS is described in the TS 38.211 section 7.4.3.1. In such an exemplary 5G implementation, in the time domain, an SS/PBCH block consists of 4 OFDM symbols, numbered in an increasing order from 0 to 3. The distribution of the PSS, SSS and PBCH signals within the SS/PBCH block is defined by Table 7.4.3.1-1.

In the frequency domain, an SS/PBCH block consists of 240 contiguous subcarriers, indexed with 0 to 239. The exact subcarriers to be used for each PSS, SSS and PBCH signal within the SS/PBCH block is also defined by Table 7.4.3.1-1.

A simplified and exemplary illustration of the SSB according to the above definitions is illustrated in **Fig. 7****,** which shows at the bottom part the PSS, SSS, and PBCH in the time and frequency domain.

The timing (OFDM symbols) at which the SS-blocks (see Fig. 7) are transmitted by the gNB can be defined differently. In particular, the first symbol indexes (within each half-frame with an SSB) with which a candidate SSB starts is determined according to 3GPP 38.213 v17.4.0, section 4.1 "Cell search". An example set of SSBs is illustrated in Fig. 7, assuming start OFDM symbols of 2, 8, 16, 22, 30, 36, 44, and 50 (case of SCS=30 kHz, and frequency > 3 GHz), wherein the relevant OFDM symbol numbering starts with 0 in a half frame. The number of SSBs in a set of SSBs can also be limited to a maximum Lmax. In one example, the SSB set can comprise 4, 8 or 64 SSBs.

The candidate SS/PBCH blocks in a half frame (e.g. termed a set of SSBs) are indexed in an ascending order in time from 0 to *Lmax* - 1. Correspondingly, each SSB within a set of SSBs is assigned a unique number (starting from 0 and increasing by 1).

The SSB set illustrated in Fig. 7 shows a case where all the possible candidate SSBs are indeed transmitted by the base station. However, it is not required to transmit all SSBs. Rather, the gNB, based on some requirements, may select only some of those SSBs within a set of SSBs and transmit those. The SSBs that are actually transmitted by the SSB can be called the SSB pattern. The SSB pattern has basically the same characteristics as the corresponding set of SSBs, including the periodicity.

The gNB informs the UE about the SSB pattern, e.g. which SSBs are in fact transmitted and which are not. This can be done e.g. by the gNB transmitting an SSB bitmap, which defines the SSB pattern, wherein each bit of the SSB bitmap relates to one SSB and identifies whether said SSB is transmitted or not. The length of the SSB bitmap depends on the applicable SSB set, e.g. 4, 8, or 64 bits.

In brief, a set of candidate SSBs is configured for use by the gNB in the cell. Furthermore, among the set of candidate SSBs, the gNB can then select either all or fewer candidate SSBs to actually transmit, called an SSB pattern.

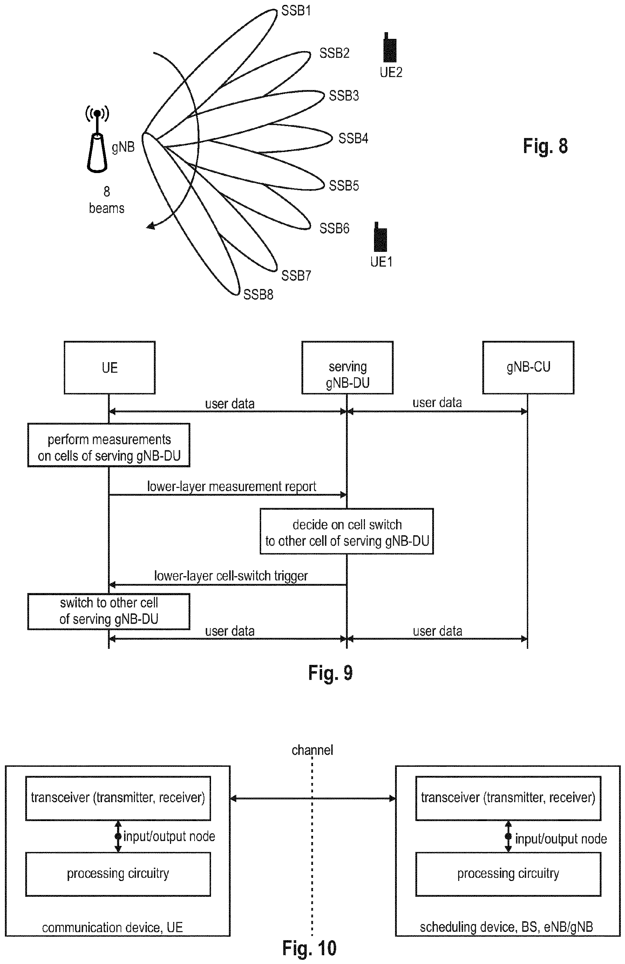

All the SSBs can be transmitted with all beams in the system. Alternatively, the SSBs can be transmitted in different beams, e.g. when SSB beamforming is enabled. In that case, each SSB is transmitted on a different spatial beam, as illustrated in **Fig. 8****.** Similar to the exemplary assumption of Fig. 7, there are 8 SSBs (0-7) which can respectively be transmitted in a different beam, each beam being transmitted in a different beam direction. Therefore, a beam-sweeping form of transmission of the SSBs is achieved; put differently, the sweeping transmission of the beams (and SSBs) is time-division multiplexed and occurs at different times. The two UEs, UE1 and UE2, will receive a different SSB at different times. Each beam has a beam index, e.g. where the beam index corresponds to the SSB index that is transmitted via said beam.

The UE uses the SSBs, and particularly the SSB signals (e.g. the PSS, SSS, PBCH) in different mechanisms, such as for serving cell measurements, time / frequency synchronization etc.

### Beam management

Beam management is a set of Layer 1 (PHY) and Layer 2 (MAC) procedures to establish and retain an optimal beam pair for good connectivity. A beam pair e.g. consists of a transmit beam and a corresponding receive beam in one link direction.

Before a UE can communicate with the network, it must perform cell search and selection procedures and obtain initial cell synchronization and system information. The first steps in that process are acquiring frame synchronization, finding out the cell identity and decoding the MIB and SIB1.

In the case of a multi-antenna system that transmits multiple beams, detecting the beams from the gNB is also a part of the initial procedure (e.g. where the UE normally detects all the beams in the search space).

Beam management can be categorized into three main procedures:
- initial beam establishment,
- beam adjustment (also called beam tracking and refining), and
- beam failure recovery, details of which will be described below.

### Layer-1-Layer-2-triggered mobility (LTM)

When the UE moves from the coverage area of one cell to another cell, at some point a serving cell change needs to be performed. According to one possibility, serving cell change is triggered by L3 measurements and is done by RRC signalling triggered Reconfiguration with Synchronisation for change of PCell and PSCell, as well as release add for SCells when applicable. Such a procedure may involve complete L2 (and L1) resets, leading to longer latency, larger overhead and longer interruption time than beam switch mobility.

In the ongoing 3GPP Rel. 18 work on mobility enhancements, supporting Layer-1-Layer-2-(also termed lower-layer) triggered mobility (LTM) is one of the topics. The UE is firstly configured by the RRC (L3) with a set of candidate cells. Then, L1- or L2 signaling (e.g. a MAC CE (and/or possibly a DCI) is used to trigger the switch of the UE's serving cell among the candidate cells without RRC reconfiguration. Put differently, to facilitate a sequential cell switch, the cell switch shall be prepared in a manner that no RRC reconfiguration is needed for the UE after the cell switch, regardless of which candidate cell becomes the new serving cell. The goal is to reduce latency, overhead and interruption time for the serving cell change. Intra-DU and intra-CU inter-DU cells switches are both within the scope. **Fig. 6** illustrates the intra-DU switch between two cells of the same gNB-DU as well as the inter-DU switch between two cells of different gNB-DUs.

**Fig. 9** is a simplified and exemplary message exchange for an intra-DU lower-layer cell switch for according to the ongoing 3GPP Rel. 18 work. Correspondingly, it is exemplary assumed that the gNB-DU controls a plurality of cells, including the current serving cell of the UE. The gNB-DU is in connection with a gNB-CU.

As apparent therefrom, the cell switch is decided based on lower-layer (e.g. Layer 1 RSRP) measurements performed at the UE and reported to the gNB-DU (see "lower-layer measurement report"). In more detail, the UE measures reference signals from one or more candidate cells of the gNB-DU and reports the results to the gNB-DU. The gNB-DU can use the received measurement results for determining whether to execute LTM to a candidate target cell or not. The lower-layer cell-switch trigger is transmitted to the UE, such that the UE can perform the switch from the current cell to another cell of the gNB-DU.

The benefit achieved by performing the measurement and reporting by Layer 1 is the low latency.

As presented above, the lower-layer mobility procedure is based on the UE performing measurement and reporting the measurement results to the serving gNB (serving gNB-DU and/or serving gNB-CU) of the UE. To said end, the UE can be configured by its serving gNB with the necessary parameters and information. For example, the configuration of the UE for performing measurements and reporting the measurement results involves conceptually:
- The quantity or a set of quantities to be reported.
- The downlink resources for each cell on which measurements should be performed in order to derive the quantity or quantities to be reported.
- How the actual reporting is to be carried out, e.g. reporting timing and uplink channel to use for the reporting.

According to one example, the measurement and reporting can be e.g. based on the CSI reporting framework, which generally can be considered to involve two parts, one for configuration and another one for the triggering of the CSI reporting.

The *CSI-MeasConfig* IE is the highest-level IE for CSI configuration and configures not just L1-RSRP-related measurement/reporting for beam management, but also conventional CSI-related measurement/reporting (such as CQI) to determine proper MIMO precoding, modulation and coding, etc.

Mainly three types of lists are configured by the *CSI-MeasConfig* IE:
1) List of RS resource sets
   - Each RS resource set in the list contains one or multiple RS resources. E.g. multiple CSI-RS resources can be configured e.g. by a *NZP-CSI-RS-Resource* IE and then grouped into a RS resource set by a *NZP-CSI-RS-ResourceSet* IE. Other possible RS resource are defined by the lEs *CSI-IM-Resource,* and *SSB-Index.*
2) List of *CSI-ResourceConfig* I Es
   - Different *CSI-ResourceConfig* in the list can contain one or more different RS resource sets, chosen from List element 1). This may include NZP-CSI-RS-*ResourceSet, CSI-IM-ResourceSet,* and/or *CSI-SSB-ResourceSet,* respectively identified by suitable IDs (see e.g. *NZP-CSI-RS-ResourceSetld, CSI-IM-ResourceSetld,* and/or *CSI-SSB-ResourceSetld)*
3) List of CSI-ReportConfig IEs.
   - Different *CSI-ReportConfig* in the list configures different CSI report instance. This is the Information Element which links the reporting configuration of this CSI-*ReportConfig* (such as by PUCCH or PUSCH) to the measurement resource sets (i.e. one *CSI-ResourceConfig* in the above List element 2). *CSI-ResourceConfigID,* being included in the *CSI-ReportConfig* IE, identifies a *CSI-ResourceConfig* IE to be used.

Measurements and reporting can be carried out on a periodic, semi-periodic or aperiodic basis. The measurements results are reported by the UE to the gNB, e.g. as uplink control information on the PUCCH or the PUSCH. In one 5G compliant example, the CSI reporting is performed by the UE based on the definitions given in 3GPP TS 38.212 v17.4.0, in section 6.3.

In present 3GPP 5G systems, there are two types of reference signals that can be used for the measurements, the SSB (see above mentioned *SSB-Index)* and the CSI-RS (Channel State Information-Reference Signals; see above *NZP-CSI-RS-Resource* IE and *CSI-IM-Resource* IE). The SSB is always transmitted by the network and is not specific to a UE and is thus unflexible. For instance, the SSB can be used in connection with a comparatively wide beam. On the other hand, the CSI-RS can be specifically configured for a UE, and is quite flexible regarding when and how often it is transmitted (time domain) and regarding the frequency-domain resources. The CSI-RS can be used in connection with a comparatively narrow beam, because it can be configured for only one or a few UEs.

There are several reporting components of CSI in 5G NR (i.e. several different types of CSI), e.g. based on 3GPP TS 38.214 - section 5.2.1 thereof:.
- CQI (Channel Quality Information)
- PMI (Precoding Matrix Indicator)
- CRI (CSI-RS Resource Indicator)
- SSBRI (SS/PBCH Resource Block Indicator)
- LI (Layer Indicator)
- RI (Rank Indicator)
- L1-RSRP, and/or
- Capability Index

One or more or a combination of different metrics can be reported by the UE. Generally, the metrics can be grouped into two types:
- L1-RSRP-related quantities (e.g. cri-RSRP and ssb-Index-RSRP, see later IE *CSI-Report Config)*
- CSI-related quantities (e.g. the rest from the IE *CSI-Report Config*)

The L1-RSRP-related quantities are new ones introduced for the first time in NR (Rel-15), and one of their purposes is to facilitate beam management. By contrast, the CSI-related quantities (such as CQI) are traditional ones, existing in LTE already. Those traditional CSI-related quantities can be used by the base station to choose e.g. the proper MIMO precoding, modulation and coding size, etc. to match the channel condition.

An exemplary implementation follows current definitions of the 5G 3GPP standards, such as defined in 3GPP TS 38.331, and may involve e.g. the following Information Elements (IE):
*CellGroupConfig, CSI-MeasConfig, CSI-ReportConfig, CSI-ResourceConfig, NZP-CSI-RS-Resource,* and *NZP-CSI-RS-ResourceSet.*

In brief, the measurement and reporting for the LTM can be based on the CSI reporting framework of 5G. In particular, the Information Element (IE) *CSI-MeasConfig* and the Information Element *CSI-ReportConfig* indicate parameters of the CSI reporting framework usable by the UE to measure and then report the measurement results.

One possible following sequence of lEs for defining measurement and report according to the CSI framework is presented in the following:
- *CellGroupConfig* IE
   ∘ the *ServingCellConfig* IE of *SpCellConfig* or of *SCellConfig*
      ▪ *CSI-MeasConfig* IE
         • *CSI-ResourceConfig* IE
            ∘ *NZP-CSI-RS-ResourceSet*
               ▪ *NZP-CSI-RS-Resource*
            ∘ *CSI-SSB-ResourceSet*
               ▪ *SSB-Index*
            ∘ *CSI-IM-ResourceSet*
               ▪ *CSI-IM-Resource*
         • *CSI-ReportConfig* IE

The following exemplary definition of the IE *CellGroupConfig* is obtained from the 3GPP TS 38.331, section 6.3.2:

### - CellGroupConfig

The *CellGroupConfig* IE is used to configure a master cell group (MCG) or secondary cell group (SCG). A cell group comprises of one MAC entity, a set of logical channels with associated RLC entities and of a primary cell (SpCell) and one or more secondary cells (SCells).

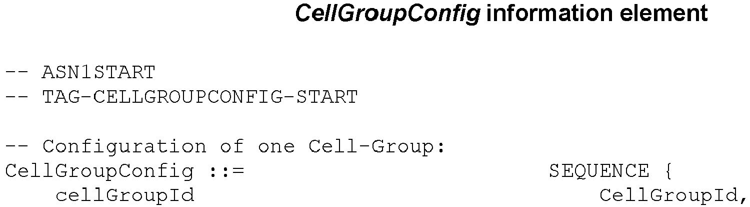

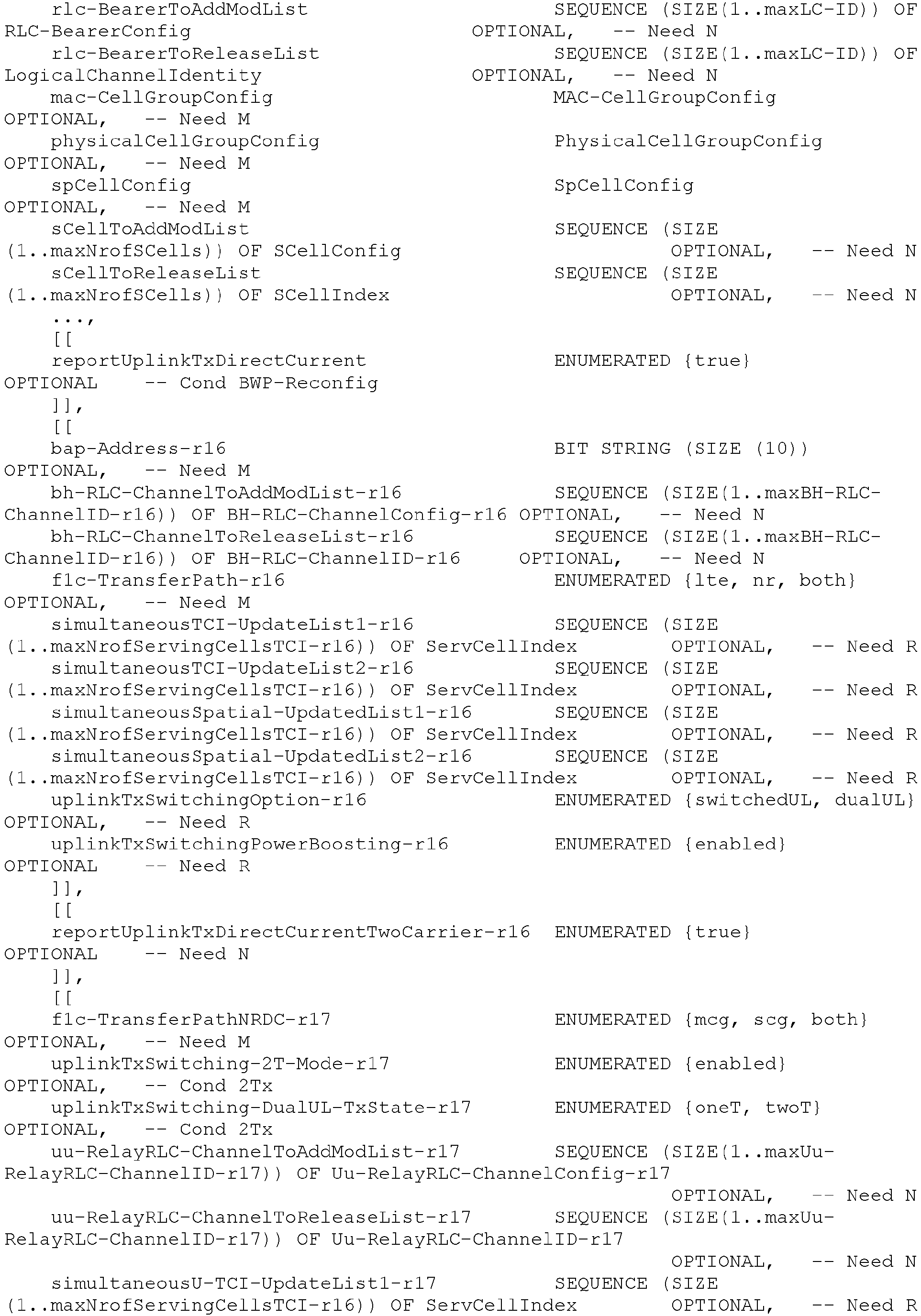

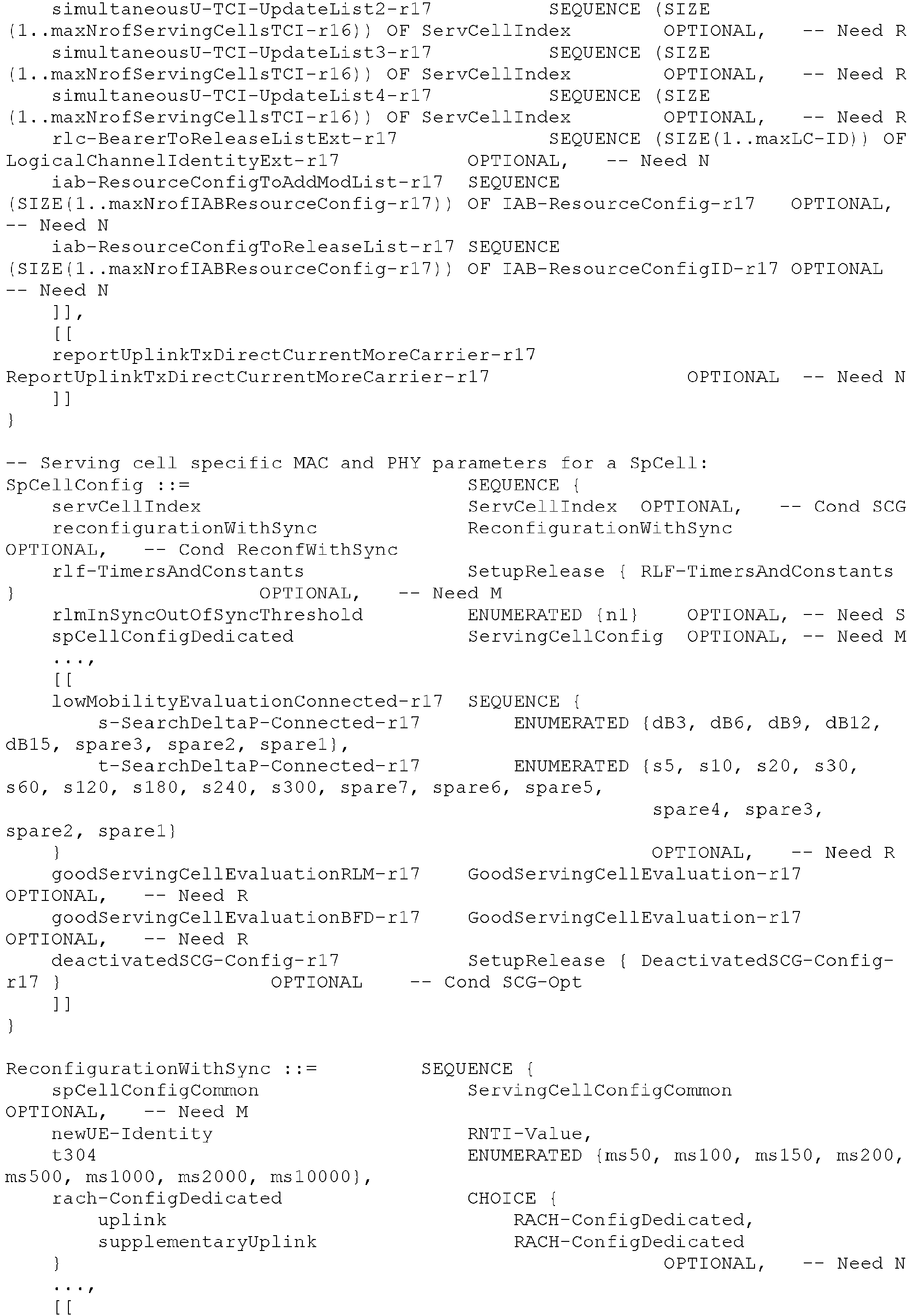

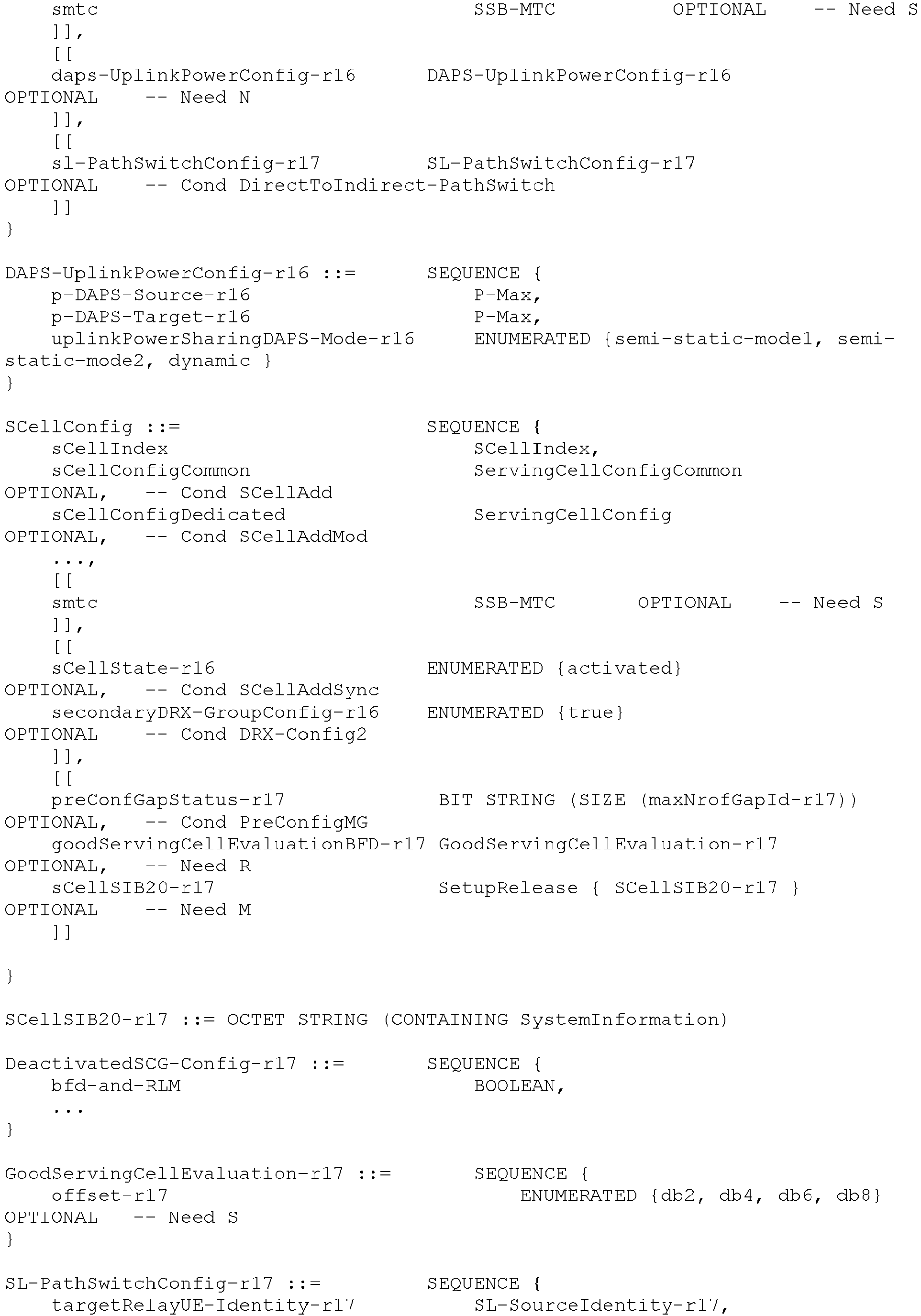

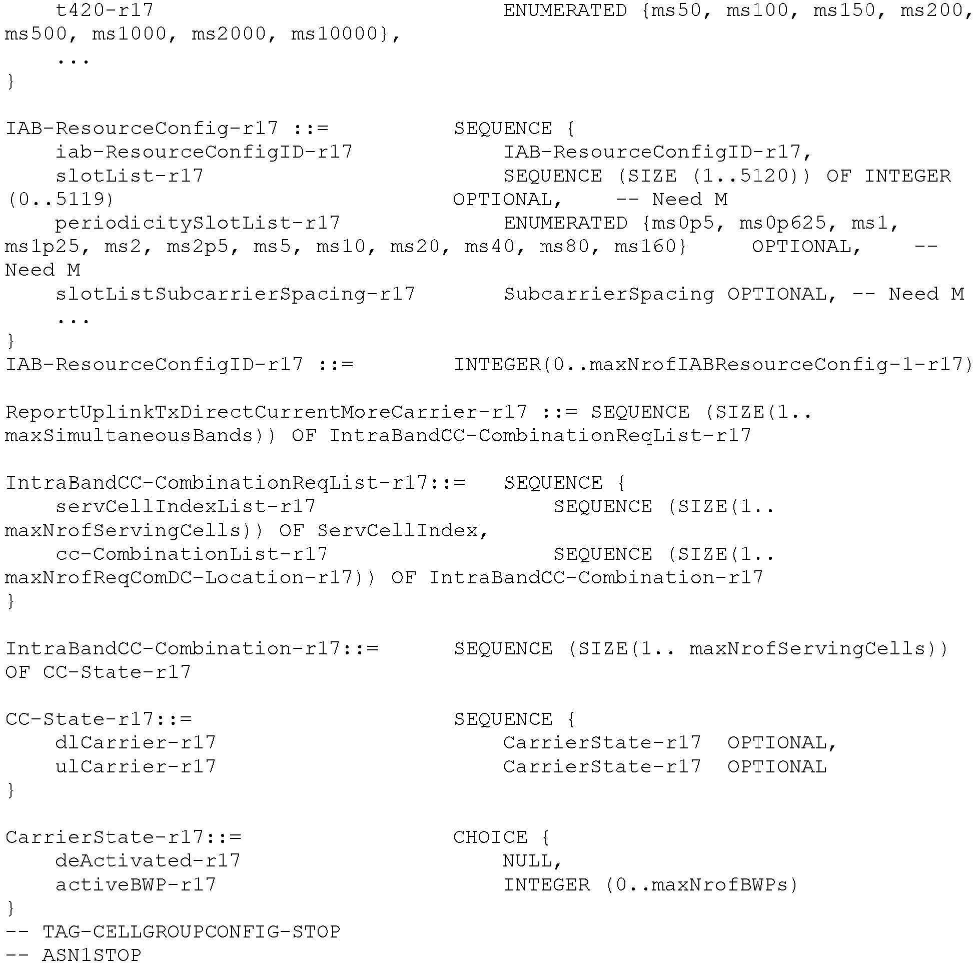

The definitions of the above field and parameters of the *CellGroupConfig* IE are in 3GPP TS 38.331. Relevant ones thereof include the ServingCellConfig and the ServingCellConfigCommon:

| ***CellGroupConfig* field descriptions** |
|---|
| ***spCellConfig*** |
| Parameters for the SpCell of this cell group (PCell of MCG or PSCell of SCG). |

The following exemplary definition of the IE *CSI-MeasConfig* is obtained from the 3GPP TS 38.331, section 6.3.2:

### - CSI-MeasConfig

The IE *CSI-MeasConfig* is used to configure CSI-RS (reference signals) belonging to the serving cell in which *CSI-MeasConfig* is included, channel state information reports to be transmitted on PUCCH on the serving cell in which *CSI-MeasConfig* is included and channel state information reports on PUSCH triggered by DCI received on the serving cell in which *CSI-MeasConfig* is included. See also TS 38.214 [19], clause 5.2.

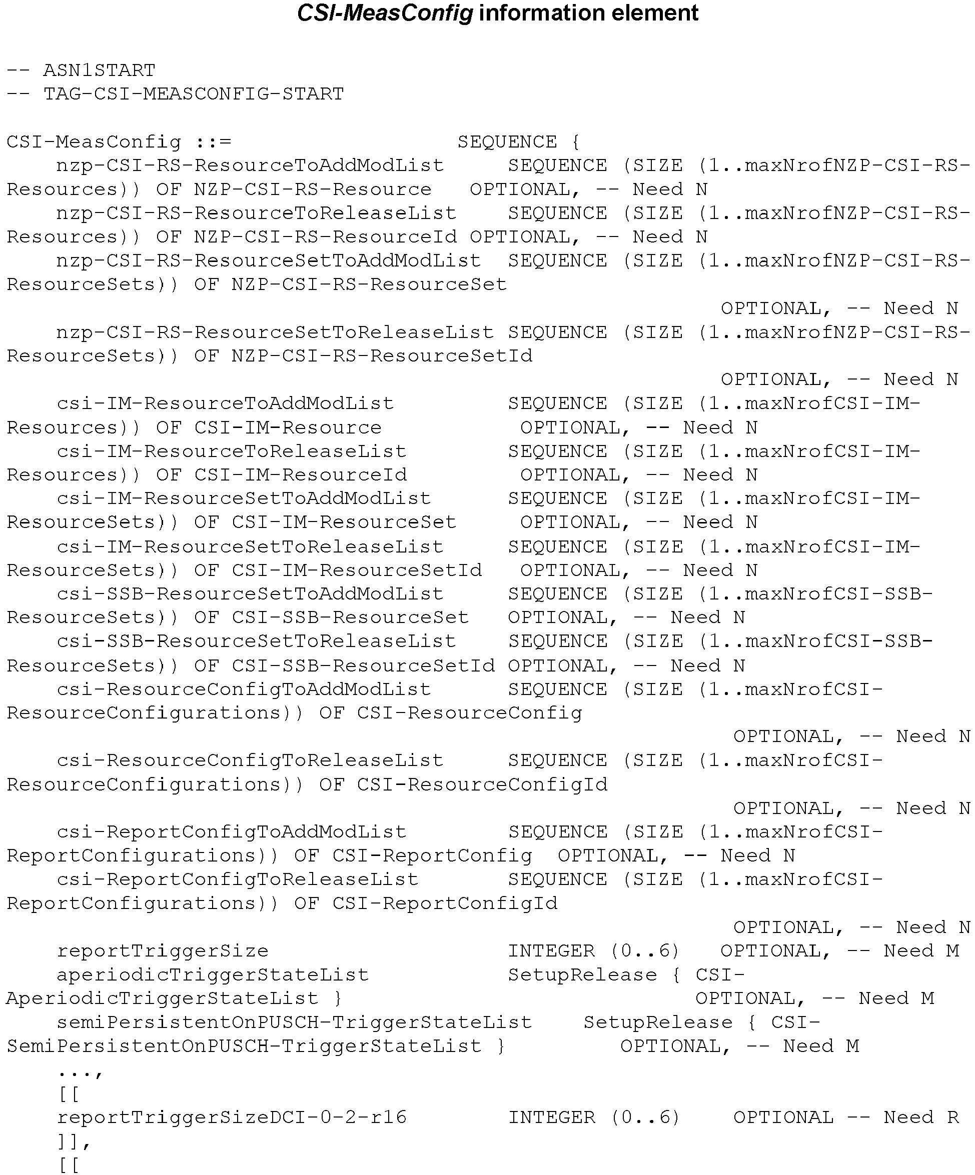

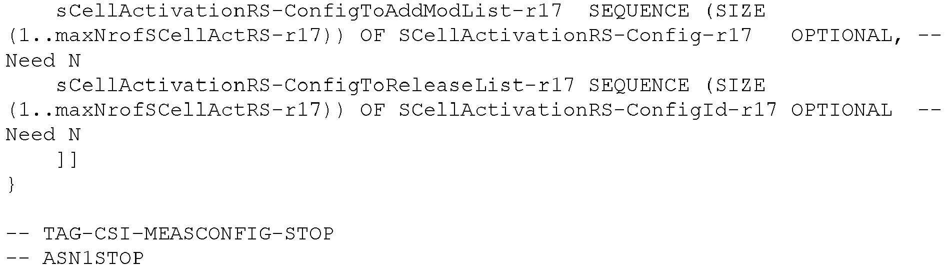

The definitions of the above field and parameters of the *CSI-MeasConfig* IE are in 3GPP TS 38.331. Relevant ones thereof include the following:

| ***CSI-MeasConfig* field descriptions** |
|---|
| ***csi-ReportConfigToAddModList*** |
| Configured CSI report settings as specified in TS 38.214 [19] clause 5.2.1.1. |
| ***csi-ResourceConfigToAddModList*** |
| Configured CSI resource settings as specified in TS 38.214 [19] clause 5.2.1.2. |
| ***csi-SSB-ResourceSetToAddModList*** |
| Pool of CSI-SSB-ResourceSet which can be referred to from *CSI-ResourceConfig.* |
| ***nzp-CSI-RS-ResourceSetToAddModList*** |
| Pool of *NZP-CSI-RS-ResourceSet* which can be referred to from *CSI-ResourceConfig* or from MAC CEs. |

The following exemplary definition of the IE *CSI-ReportConfig* is obtained from the 3GPP TS 38.331:

### - CSI-ReportConfig

The IE *CSI-ReportConfig* is used to configure a periodic or semi-persistent report sent on PUCCH on the cell in which the *CSI-ReportConfig* is included, or to configure a semi-persistent or aperiodic report sent on PUSCH triggered by DCI received on the cell in which the *CSI-ReportConfig* is included (in this case, the cell on which the report is sent is determined by the received DCI). See TS 38.214 [19], clause 5.2.1.

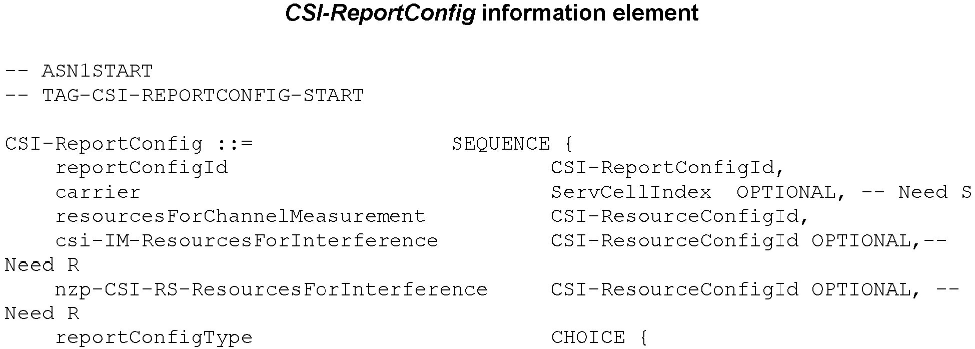

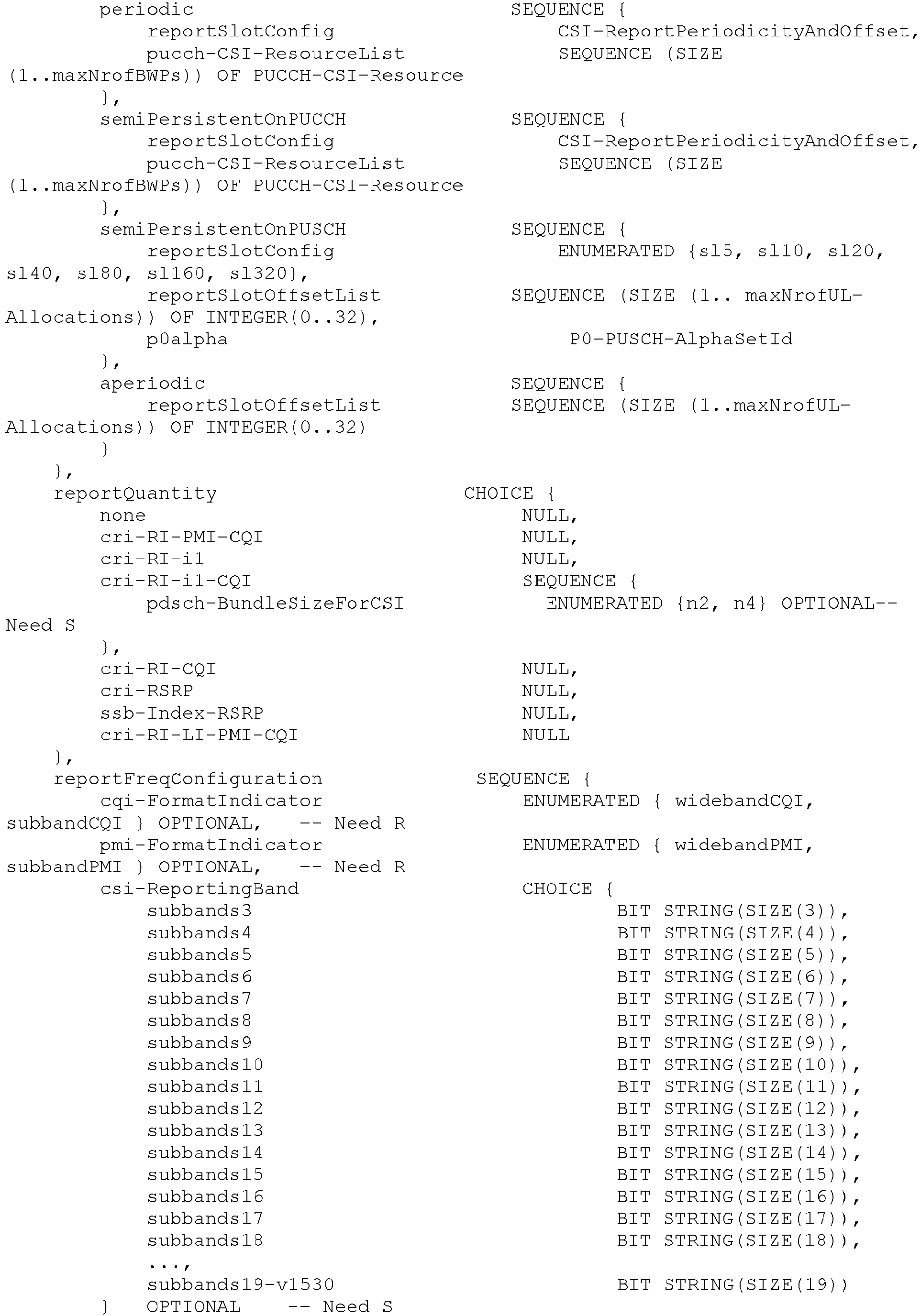

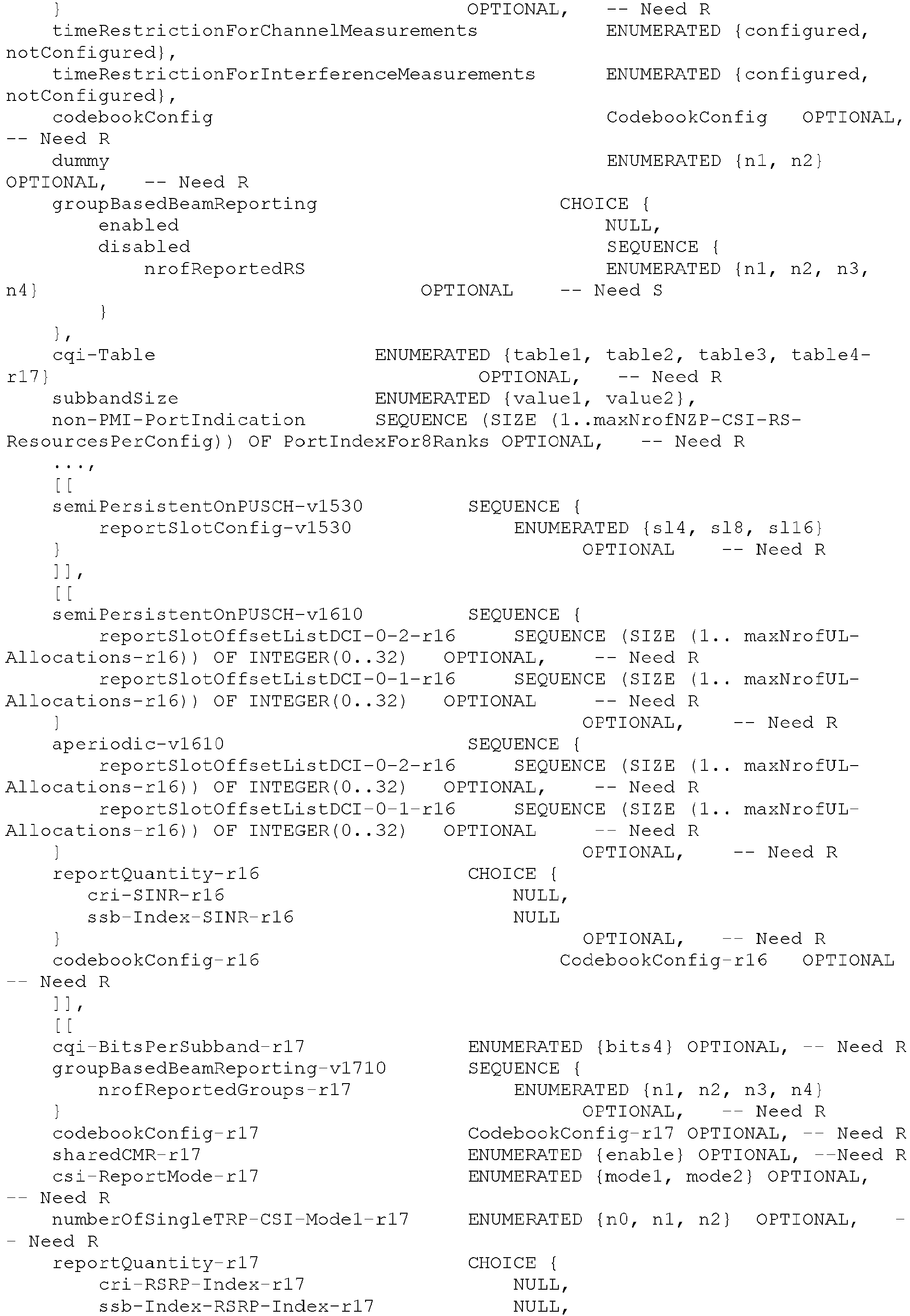

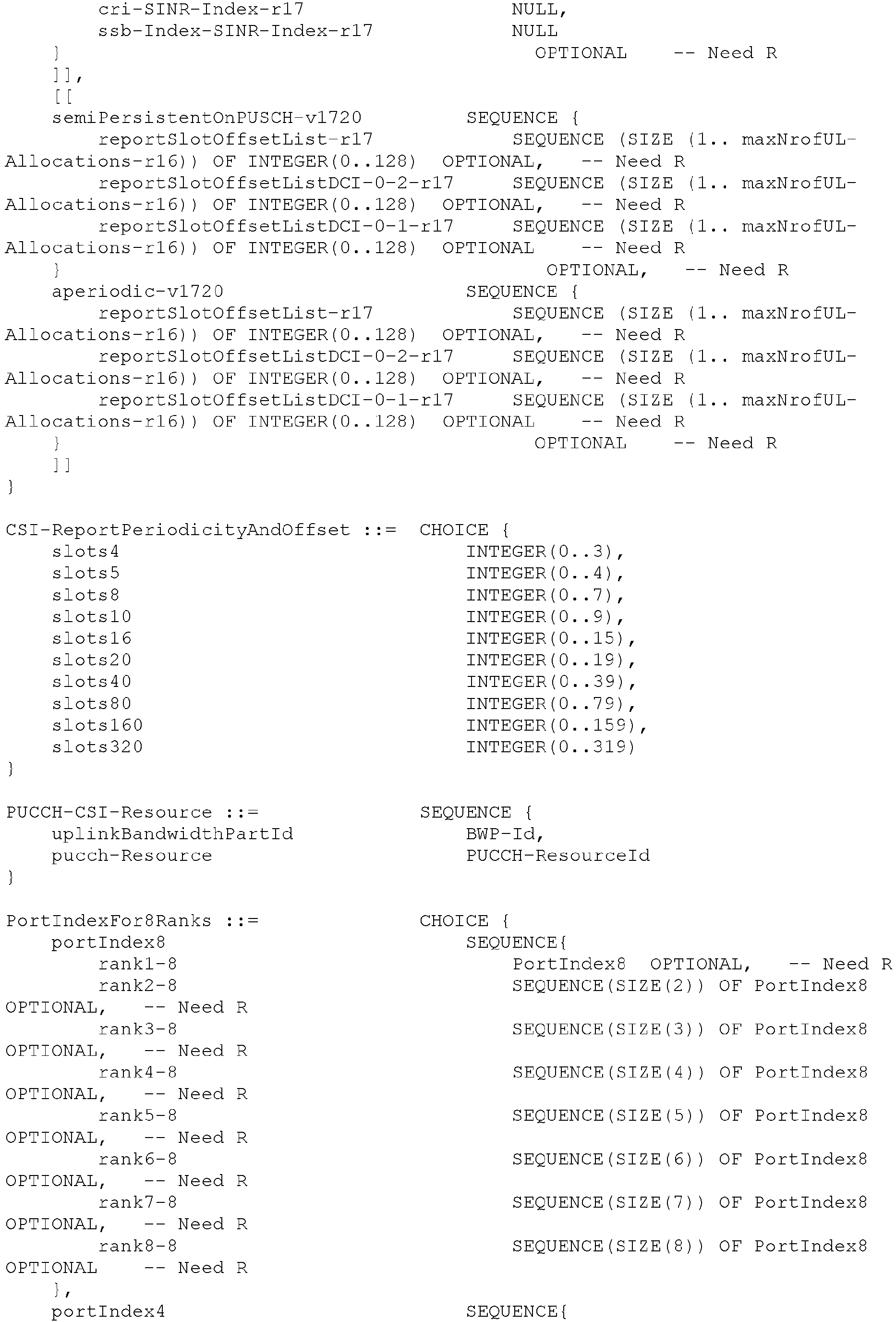

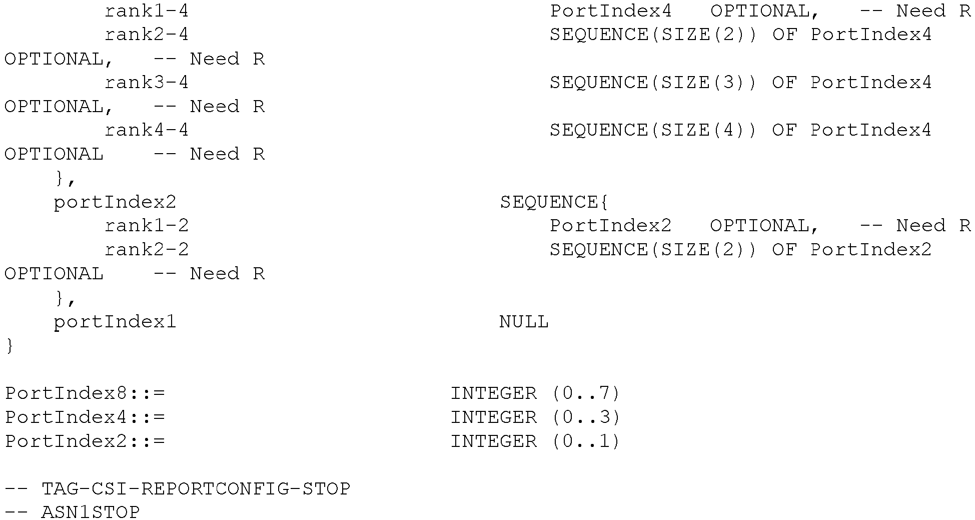

The definitions of the above field and parameters of the *CSI-ReportConfig* IE are in 3GPP TS 38.331. Relevant ones thereof include the following:

| ***CSI*-*ReportConfig* field descriptions** |
|---|
| ***resourcesForChannelMeasurement*** |
| Resources for channel measurement. *csi-ResourceConfigld* of a *CSI-ResourceConfig* included in the configuration of the serving cell indicated with the field "carrier" above. The *CSI-ResourceConfig* indicated here contains only NZP-CSI-RS resources and/or SSB resources. This *CSI-ReportConfig* is associated with the DL BWP indicated by *bwp-Id* in that *CSI-ResourceConfig.* |

The following exemplary definition of the IE *CSI-ResourceConfig* is obtained from the 3GPP TS 38.331, section 6.3.2:

### - CSI-ResourceConfig

The IE *CSI-ResourceConfig* defines a group of one or more *NZP-CSI-RS-ResourceSet, CSI-IM-ResourceSet* and/or *CSI-SSB-ResourceSet.*

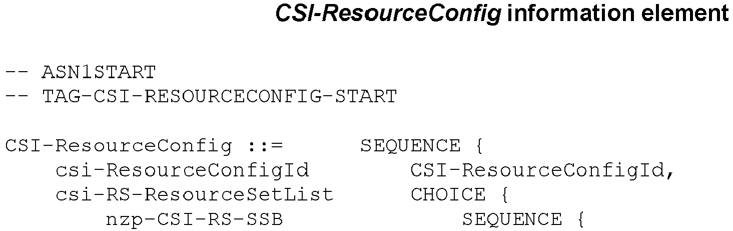

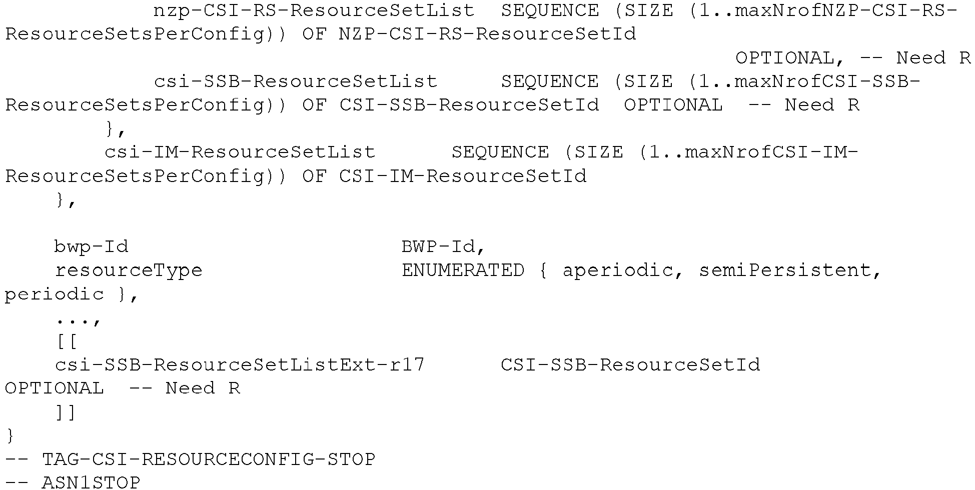

The definitions of the above field and parameters of the *CSI-ResourceConfig* IE are in 3GPP TS 38.331. Relevant ones thereof include the following:

| ***CSI-ResourceConfig* field descriptions** |
|---|
| ***csi-SSB-ResourceSetList, csi-SSB-ResourceSetListExt*** |
| List of references to SSB resources used for CSI measurement and reporting in a CSI-RS resource set (see TS 38.214 [19], clause 5.2.1.2). If *groupBasedBeamReporting-v1710* is configured in the IE *CSI-ReportConfig* that indicates this *CSI-ResourceConfig* as *resourceForChannelMeasurement,* the network configures 2 resource sets, which may be two NZP CSI-RS resource sets, two CSI SSB resource sets or one NZP CSI-RS resource set and one CSI-SSB resource set (see TS 38.214 [19], clause 5.2.1.2 and 5.2.1.4.2). In this case, in TS 38.212 [17] Table 6.3.1.1.2-8B: |
| - if the list has one CSI-SSB resource set, this resource set is indicated by a resource set indicator set to 1, while the resource set indicator of the *NZP CSI-RS resource* set is 0; |
| - if the list has two CSI-SSB resource sets, the first resource set is indicated by a resource set indicator set to 0 and the second resource set by a resource set indicator set to 1. |
| ***nzp-CSI-RS-ResourceSetList*** |
| List of references to NZP CSI-RS resources used for beam measurement and reporting in a CSI-RS resource set. Contains up to *maxNrofNZP-CSI-RS-ResourceSetsPerConfig* resource sets if *resource Type* is 'aperiodic'. Otherwise, contains 1 resource set when *groupBasedBeamReporting-v1710* is not configured in IE CSI-*ReportConfig.* If *groupBasedBeamReporting-v1710* is configured and *resource Type* is set to 'periodic' or 'semipersistent', then the network configures 2 resource sets, which may be two NZP CSI-RS resource sets, two CSI SSB resource sets or one NZP CSI-RS resource set and one CSI-SSB resource set (see TS 38.214 [19], clause 5.2.1.2 and 5.2.1.4.2). In this case, in TS 38.212 [17] Table 6.3.1.1.2-8B, the following applies: |
| - if the list has one NZP CSI-RS resource set, this resource set is indicated by a resource set indicator set to 0; |
| - if the list has two NZP CSI-RS resource sets, the first resource set is indicated by a resource set indicator set to 0 and the second resource set by a resource set indicator set to 1. |

### Further Improvements

In Re. 15/16, the Layer-1(L1) measurement is carried out by the UE on the reference signals of the serving cell. In Rel. 17, in order to support inter-cell beam management (ICBM), a new mechanism has been introduced to enable the UE to perform L1-measurements on the reference signals of neighbouring cells, as will be explained below.

The mechanism is basically to include the RS of neighbouring cells in the measurement resource set configured by the serving cell. But the way to do this is different between SSB and CSI-RS.

For SSB, the IE *CSI-SSB-ResourceSet* has the parameter "*ServingAddtionalPCIIndex-r17*" that provides the non-serving cell IDs to the SSB. Details can be found in TS 38.331.

For CSI-RS, UE needs to be configured with a CSI-RS under its serving cell which has a QCL relation to a SSB of a neighbouring cell. This is done by providing a QCL source using *TCI-State.* In more details, in IE *NZP-CSI-RS-Resource,* there is a field *TCI-Stateld,* which points to additionalPCI-r17 where the non-serving cell ID can be indicated for a SSB to be used as the QCL source of the concerned CSI-RS. See TS 38.331 for details.

However, there is an important condition for this Rel. 17-ICBM in that the neighbouring cells and the serving cell are served by the same gNB-DU. In particular, the gNB-DU must have knowledge of the resource signal configuration of the neighbouring cells. The gNB-DU may include the resource signal configuration for any of its neighbouring cells into the measurement resource set configuration for the UE. Correspondingly, the UE has the necessary information on the resource signal of neighbouring cells to perform the L1-measurements for Rel.-17-ICBM. This condition can be achieved by the gNB-DU for an intra-DU cell switch as shown in Fig. 9.

On the other hand, for L1-L2-triggered mobility (LTM) between different gNB-DUs, i.e. for inter-DU LTM, it is unclear how the UE can be configured to measure the reference signals of cells of another gNB-DU, because the source gNB-DU of the serving cell of the UE does not know the resource signal configuration of this other gNB-DU.

The inventors thus identified the possibility to define an improved mobility procedure for facilitating to avoid one or more of the above described disadvantages. The present invention relates to different solutions and variants for such an improved mobility procedure.

### Embodiments

In the following, UEs, base stations, and respective procedures to meet these needs will be described for the new radio access technology envisioned for the 5G mobile communication systems, but which may also be used in previous LTE-based mobile communication systems or future (e.g. 6G) mobile communication systems. Different implementations and variants will be explained as well. The following disclosure was facilitated by the discussions and findings as described above and may for example be based at least on part thereof.

In general, it should be noted that many assumptions have been and are made herein so as to be able to explain the principles underlying the present disclosure in a clear, concise and understandable manner. These assumptions are however to be understood merely as examples made herein for illustration purposes, which are not necessarily essential for the invention and should thus not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next communication systems is not fully decided yet or might finally change. Thus, terms could be changed in the future, without affecting the functioning of the respective features and solutions. Consequently, a skilled person is aware that the solutions and their scope of protection should not be restricted to particular terms exemplarily used herein for lack of newer or finally agreed terminology, but should be more broadly understood in terms of functions and concepts that underlie the solutions explained in the present disclosure.

For instance, a **mobile station** or **mobile node** or **user terminal** or **user equipment (UE)** is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term **"base station"** or **"radio base station"** here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB. Moreover, the base station may also be gNB in a Non-Terrestrial Network (NTN) NR system.

Communication between the UE and the base station is typically standardized and may be defined by different layers, such as PHY, MAC, RRC etc. (see above background discussion).

**Fig. 10** illustrates a general, simplified and exemplary block diagram of a user equipment (also termed communication device) and a scheduling device (here exemplarily assumed to be located in the base station, e.g., the LTE eNB (alternatively termed ng-eNB) or the gNB in 5G NR). The UE and eNB/gNB are communicating with each other over a (wireless) physical channel respectively using the transceiver.

The communication device may comprise a transceiver and processing circuitry. The transceiver in turn may comprise and/or function as a receiver and a transmitter. The processing circuitry may be one or more pieces of hardware such as one or more processors or any LSIs. Between the transceiver and the processing circuitry there is an input/output point (or node) over which the processing circuitry, when in operation, can control the transceiver, i.e., control the receiver and/or the transmitter and exchange reception/transmission data. The transceiver, as the transmitter and receiver, may include the RF (radio frequency) front including one or more antennas, amplifiers, RF modulators/demodulators and the like. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc. The transmitter may be responsible for performing the process of transmitting and other processes related thereto. The receiver may be responsible for performing the process of receiving and other processes related thereto, such as monitoring a channel.

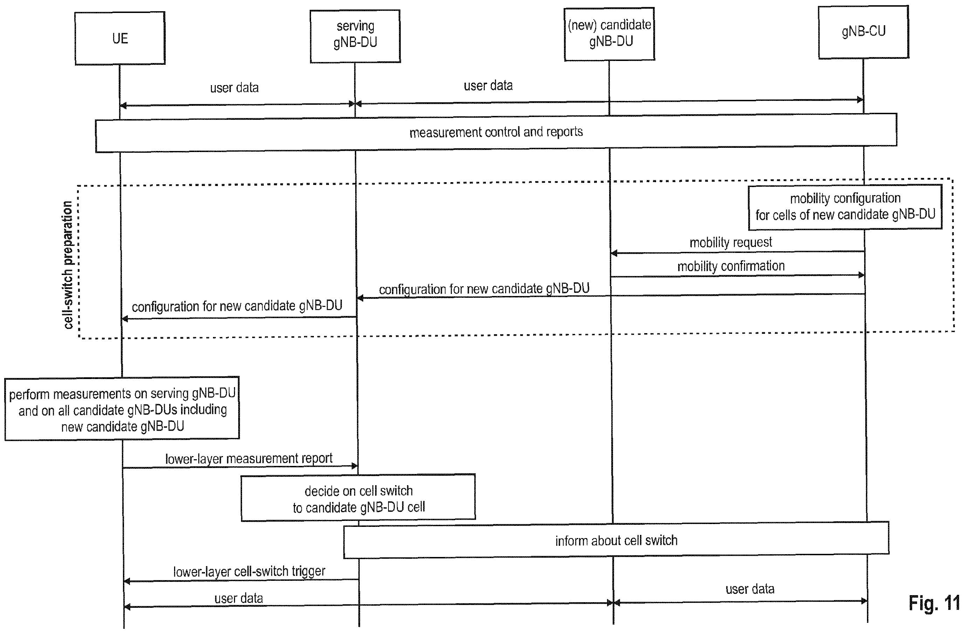

The present invention relates to different solutions and variants for an improved mobility procedure. One simplified example of a mobility procedure is presented in the following, based on **Fig. 11****.**

In particular, a split-gNB architecture is exemplarily assumed, with one gNB-CU and several gNB-DUs. The UE is located in a cell of its serving gNB-DU and exchanging user data via its serving gNB-DU and the gNB-CU. Moreover, the UE can be configured to perform measurements on the cells of its serving gNB-DU and to report measurement results to the gNB-DU (and possible further to the gNB-CU). For instance, the UE has already configuration information of its serving gNB-DU, including a measurement configuration of the serving gNB-DU. Such a communication configuration of a gNB-DU may for instance also include lower-layer configurations parameters for the gNB-DU, such as information on downlink and uplink channels, etc. The UE can also be provided already with higher-layer parameters, such as relating to RRC, necessary for its operation and connection to the gNB-CU.

It is assumed that the gNB-CU determines a new cell of a new gNB-DU (i.e. different from the current serving gNB-DU), to which the UE may eventually switch. In one example, the gNB-CU maintains, for the UE, a list of candidate cells (and their corresponding gNB(-DUs)). For example, the candidate cell list indicates the candidate cells, respectively associated with the corresponding communication configuration for said cell and its gNB(-DU).

In order to prepare for such a cell switch, the gNB-CU requests (see mobility request) the new gNB-DU whether it would participate in mobility for the UE. The new gNB-DU, and its cell, thus becomes a candidate for a later cell switch of the UE.

In order to facilitate a possible later switch to a cell of this new gNB-DU, the UE is provided by the gNB-CU with suitable configuration information of the new candidate gNB-DU, which was obtained by the gNB-CU from the mobility confirmation message received from the new gNB-DU. The configuration information of the new candidate gNB-DU may comprise the necessary information for the UE when connecting to the gNB-DU, such as information on downlink and uplink channels, etc. The UE continues to perform measurements for supporting lower-layer mobility (e.g. see 5G LTM, described above) including the new candidate cell of the new gNB-DU. The UE at this point should have been provided with the information on the reference signals transmitted in the new candidate cell of the new candidate gNB-DU. The UE thus is able to measure the reference signals of cells of the serving gNB-DU and also reference signals of the candidate cells of the new candidate gNB-DU (and possibly any further candidate cells of other gNB-DUs already existing before). A lower-layer measurement report is transmitted to the serving gNB-DU, which in turn may decide at some point of time to perform a cell switch for the UE from the current serving cell of the serving gNB-DU to a cell of the candidate gNB-DU; i.e. an inter-DU cell switch is performed. The procedure may e.g. also include that the serving gNB-DU informs the new gNB-DU and possibly the gNB-CU about the cell switch.

In any case, a lower-layer cell-switch trigger is transmitted by the serving gNB-DU to the UE, which indicates the determined candidate cell of the new candidate gNB-DU as the target of the cell switch. The cell switch is then performed by the UE to the indicated candidate cell. As a result, the user data is now exchanged between the UE and the gNB-CU via the new serving gNB-DU (previous candidate gNB-DU).

It is one part and one object of the cell-switch preparation as exemplified in Fig. 11 to also provide the UE with suitable information on the reference signals of the candidate cells of the new candidate gNB-DU, so as to be able to perform the lower-layer measurements to support the lower-layer mobility. Further, to facilitate a sequential cell switch, the cell switch shall be prepared in a manner that no higher-layer (e.g. RRC) reconfiguration is needed for the UE after the cell switch, regardless of which candidate cell becomes the new serving cell.

The present invention provides several solutions, and respective variants thereof, to improve the cell-switch preparation and thus improve the overall mobility procedure.

As an overview, the First Solution involves that the gNB-CU is mainly responsible to obtain the required information on the reference signals, RS, for any candidate gNB-DU and then to maintain an updated list of RS resource configurations for the current serving gNB-DU of the UE as well as all the candidate gNB-DUs possible for supporting a possible cell switch. The First Solution further differentiates between two variants, wherein the First Variant involves that each gNB-DU (including the serving gNB-DU as well as all candidate gNB-DUs) includes a measurement configuration with an up-to-date and complete list of RS resource configurations (e.g. including configurations for the current serving gNB-DU of the UE as well as all the candidate gNB-DUs for a possible cell switch). The Second Variant of the First Solution, on the other hand, uses a new type of measurement configuration, which does not necessarily include the RS resource configuration of the respective gNB-DU. The RS resource configuration of a gNB-DU is rather provided separately from the measurement configuration of said gNB-DU. Also the up-to-date and complete list of RS resource configurations is separate from the measurement configuration of a gNB-DU, such that they may be used together.

The Second Solution is based on that the UE is mainly responsible to maintain an updated and complete list of RS resource configurations, e.g. for the current serving gNB-DU of the UE as well as all the candidate gNB-DUs possible for a possible cell switch.

In connection with the First and Second solutions, improved UEs, improved base stations (here e.g. a distributed unit and central unit of the base station) and improved integrated circuits are presented, which participate separately or together in the improved mobility procedures.

Corresponding methods for the UE behavior and the base station behavior are provided as well. The integrated circuits may correspond to the UE and base station, and respectively their behavior.

The following First and Second solutions can be based on some or a combination of the different mechanisms described above in context of the exemplary 3GPP 5G-NR implementations, including e.g. the use of the signaling mechanisms (e.g. of the new F1 interface for the Split-gNB architecture, using information elements for measurement configuration and reporting) or how the L1-L2-triggered mobility (LTM) is defined, as currently discussed in 3GPP.

According to an exemplary implementation, the improved mobility procedure according to the following First and Second solutions can be provided in accordance with the 3GPP standards. In said case, the communication configuration mentioned for the improved mobility procedure can be implemented same as or similar to the IE *CellGroupConfig,* and the measurement configuration can be implemented same as or similar to the IE *CSI-MeasConfig.*

According to one example implementation, the above mentioned candidate list for a UE can have the following structure:

```
 LTM candidate cell list: {
 Candidate Cell Configuration ID 1: OCTET STRING (CONTAINING CellGroupConfig) for Cell 1
 Candidate Cell Configuration ID 2: OCTET STRING (CONTAINING CellGroupConfig) for Cell 2 ... }
```

Then, an LTM cell-switching command may indicate one of the configuration IDs. Once the UE receives such an LTM cell-switching command, the corresponding *CellGroupConfig* IE becomes the new serving cell.

### First Solution - gNB-CU maintains updated RS-resource-configuration list

As introduced above, the First Solution involves that the gNB-CU is mainly responsible for obtaining the required information on the reference signals, RS, for any candidate gNB-DU and then for maintaining an updated list of RS resource configurations for the current serving gNB-DU of the UE as well as for all the candidate gNB-DUs for supporting a possible cell switch.

In more detail, the First Solution of the improved mobility procedure provides at least an improved central unit of a base station, BS-CU, as will be discussed below.

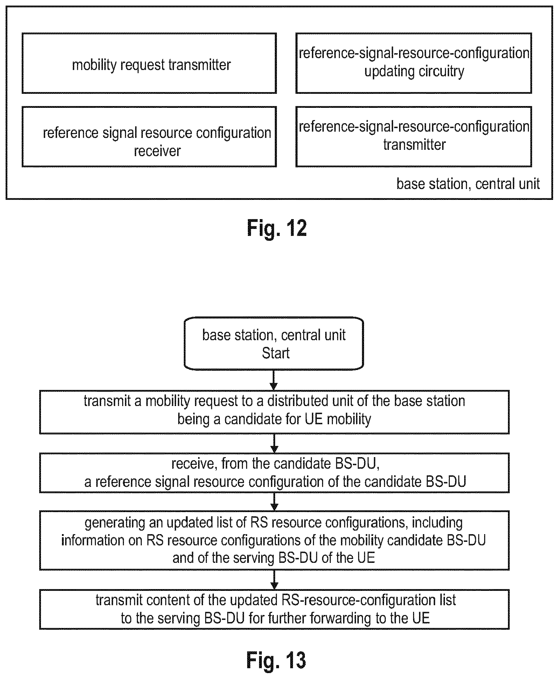

**Fig. 12** illustrates a simplified and exemplary structure of a central unit of a base station according to an exemplary implementation of the improved mobility procedure according to the First Solution, which can be implemented based on the general base station structure explained in connection with Fig. 10. The various structural elements of the base station central unit illustrated in said Fig. 12 can be interconnected between one another e.g., with corresponding input/output nodes (not shown) e.g., in order to exchange control and user data and other signals. Although not shown for illustration purposes, the base station central unit may include further structural elements.

As apparent therefrom, the base station central unit comprises a mobility request transmitter, a reference-signal-resource-configuration receiver, a reference-signal-resource-configuration updating circuitry, and a reference-signal-resource-configuration transmitter.

In the present case as will become apparent from the below disclosure, the receiver of the base station central unit can thus be exemplarily configured to at least partly perform one or more of receiving a reference-signal resource configuration and receiving a communication configuration, etc.

In the present case as will become apparent from the below disclosure, the processing circuitry of the base station central unit can thus be exemplarily configured to at least partly perform generating an updated list of RS resource configurations, etc.

In the present case as will become apparent from the below disclosure, the transmitter of the base station central unit can thus be exemplarily configured to at least partly perform one or more of transmitting a mobility request and transmitting content of an updated RS resource configuration list, etc.

One exemplary procedure as will be disclosed in more detail further below is implemented by a base station central unit that includes the following. A transmitter transmits a mobility request to a distributed unit of the base station, mobility-candidate BS-DU, being a candidate for participating in mobility for a user equipment, UE. A receiver of the BS-CU receives, from the mobility-candidate BS-DU, a reference signal, RS, resource configuration of the mobility-candidate BS-DU relating to a candidate cell of the mobility-candidate BS-DU. A processing circuitry of the BS-CU generates an updated list, the updated RS-resource-configuration list having information on the received RS-resource configuration of the mobility-candidate BS-DU and on a RS-resource configuration of at least a serving BS-DU serving the UE. The transmitter transmits content of the updated RS-resource configuration list to the serving BS-DU for further forwarding to the UE.

A corresponding method comprises the following steps performed by the base station central unit:
transmitting a mobility request to a distributed unit of the base station, mobility-candidate BS-DU, being a candidate for participating in mobility for a user equipment, UE,
receiving, from the mobility-candidate BS-DU, a reference signal, RS, resource configuration of the mobility-candidate BS-DU relating to a candidate cell of the mobility-candidate BS-DU,
generating an updated list, the updated RS-resource-configuration list having information on the received RS-resource configuration of the mobility-candidate BS-DU and on a RS-resource configuration of at least a serving BS-DU serving the UE, and
transmitting content of the updated RS-resource configuration list to the serving BS-DU for further forwarding to the UE.

A corresponding sequence diagram for an exemplary behavior of the base station central unit in line with the above-discussed base station central unit and corresponding method is illustrated in Fig. 13. The sequence diagram illustrates an exemplary and simplified implementation of the above presented method.

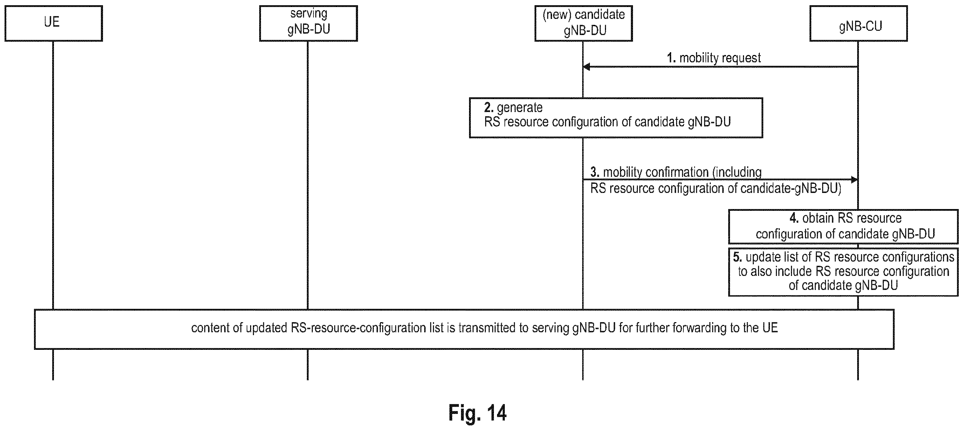

**Fig. 14** is a signaling diagram of an exemplary and simplified implementation of the improved mobility procedure according to the First Solution, illustrating the exchange of messages between the different participating entities (here the UE and gNB-DUs and gNB-CU) and the steps performed at these entities. As apparent from Fig. 14, the content of the updated RS-resource-configuration list, updated by the gNB-CU, is eventually forwarded from the gNB-CU, via the serving gNB-DU, to the UE.

According to the above implementation of the First Solution, it is thus possible to maintain an up-to-date list of the RS resource configurations relating to different gNB-DUs, so as to support cell switches to a cell controlled by a gNB-DU that is different from the current serving gNB-DU. The UE can then easily be provided with the content of such an up-to-date RS-resource-configuration list, including the necessary information on the RS resources used by the serving gNB-DU and at least a further different gNB-DU. The UE can thus perform measurements on cells of a gNB-DU different from its serving gNB-DU. Thus, an inter-gNB-DU cell switch is facilitated.

In the following, two different variants of the First Solution will be presented.

### First Variant -

As indicated above, the First Variant involves that each gNB-DU (including the serving gNB-DU as well as all candidate gNB-DUs) generates a measurement configuration with an up-to-date and complete list of RS resource configurations (e.g. including configurations for the current serving gNB-DU of the UE as well as all the candidate gNB-DUs possible for a cell switch).

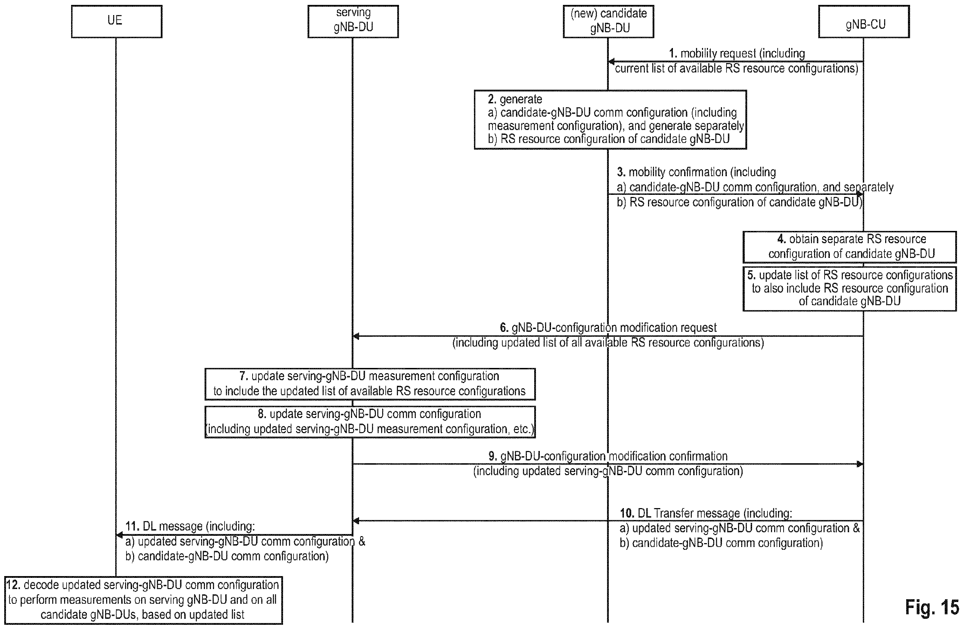

One more detailed implementation of the First Solution of the improved mobility procedure will be described for the First Variant in connection with **Fig. 15****,** which can be considered to illustrate how to perform the cell switch preparation as initially discussed in connection with Fig. 11. In more detail, it is illustrated how the lower-layer mobility of the UE can be extended to cover a new candidate gNB-DU and its cell. The cell to be added to the candidate-cell list of the UE belongs to a candidate gNB-DU different from the serving gNB-DU. One object of the cell switch preparation involves that the UE is provided with suitable information on the reference signals of the candidate cells of the new candidate gNB-DU.

For reasons of simplicity, it is exemplarily assumed that the new candidate gNB-DU has one cell for which the preparation has to be performed. However, the First Variant of the First Solution is equally applicable to a scenario where the new candidate gNB-DU has more than one cell for which the preparation has to be performed. In such a case, the cell switch preparation covers the plural candidate cells of the candidate gNB-DU (a subset or full set of cells of the candidate gNB-DU).

In order for the new candidate gNB-DU to participate in the lower-layer mobility of the UE, the gNB-CU transmits a mobility request message to the new candidate gNB-DU (step 1.).

According to this example, it is assumed that the mobility request can already include a current RS-resource-configuration list, which includes the RS resource configuration of the serving gNB-DU. In order to allow this, the gNB-CU may have previously obtained the RS resource configuration of the serving gNB-DU.

As a still further example, the current RS-resource-configuration list can also be provided to the candidate gNB-DU in another message than the mobility request.

It is assumed that the candidate gNB-DU confirms that it participates in the UE lower-layer mobility.

In step 2., the candidate gNB-DU generates a communication configuration for the candidate gNB-DU, relating to the candidate cell. This candidate-gNB-DU communication configuration can include a RS resource configuration relating to its own candidate cell but also a RS resource configuration relating to the serving gNB-DU (if received from the gNB-CU). The two RS resource configurations can e.g. be included in the measurement configuration of the communication configuration and are thus mapped (could also be termed "linked") to the measurement configuration of the candidate gNB-DU.

Furthermore, the candidate gNB-DU separately generates a RS resource configuration for the candidate gNB-DU (and its candidate cell) and transmits same to the gNB-CU. Separating the RS resource configuration information from the communication configuration information allows the gNB-CU to decode only the RS resource configuration without having to decode the communication configuration of the candidate gNB-DU. For the communication configuration, as will be explained below, the gNB-CU can simply forward it to the UE via the serving gNB-DU without need for interpreting it.

In step 3., the candidate gNB-DU transmits a suitable mobility confirmation message to the gNB-CU, including the thus generated items: the candidate-gNB-DU communication configuration and separately the RS resource configuration of the candidate gNB-DU.

In step 4., the gNB-CU obtains the RS resource configuration of the candidate gNB-DU, and then, in step 5., the gNB-CU updates a current list of RS resource configurations so as to also include the received RS resource configuration of the candidate gNB-DU. The resulting updated and now-complete list would thus include RS-resource configurations for cells relating to the serving gNB-DU and the candidate gNB-DU.

According to the First Variant of the First Solution, the serving gNB-DU is required to generate a communication configuration, particularly a measurement configuration as part of the communication configuration, which includes the up-to-date RS-resource-configuration list. The reason is that this updated communication configuration of the serving gNB-DU is to be provided to the UE and then should be followed by the UE, while still being connected to the serving gNB-DU, such that the communication configuration needs to include the up-to-date RS resource configurations. To said end, the gNB-CU requests the serving gNB-DU to modify the communication configuration, and provides the updated RS-resource-configuration list to the serving gNB-DU (step 6.).

Following the request, the serving gNB-DU updates its measurement configuration to include the updated RS-resource-configuration list (step 7.). The serving gNB-DU then updates its communication configuration, based on the updated measurement configuration (step 8.). The resulting updated communication configuration has thus the content of the updated RS-resource-configuration list mapped (could also be termed "linked") to the measurement configuration of the serving gNB-DU. This updated communication configuration of the serving gNB-DU, updated to include the up-to-date RS-resource-configuration list, is then transmitted to the gNB-CU, as part of a modification confirmation message (step 9.).

The gNB-CU now can transfer (step 10.) the received updated communication configuration of the serving gNB-DU as well as the communication configuration of the candidate gNB-DU to the serving gNB-DU. The serving gNB-DU forwards the received information to the UE (step 11.)

Consequently, the communication configurations of both the serving gNB-DU and the candidate gNB-DU include the updated RS-resource-configurations and thus respectively provide the UE with a complete picture of the RS resources to be measured by the UE. While the UE is still connected to the serving gNB-DU, the UE follows the measurement configuration of the serving-gNB-DU communication configuration, and particularly the RS resource configuration therein, which has the information on the RS resource configuration for all mobility-candidate cells.

Correspondingly, in step 12., the UE can perform the measurements on the cells as configured, e.g. of the serving gNB-DU and of the new candidate gNB-DU (possibly also of all further candidate gNB-DUs, if such had been added before).

Furthermore, the UE, when eventually performing the cell switch to the cell of the candidate gNB-DU, would follow the measurement configuration of the candidate-gNB-DU communication configuration, and particularly the RS resource configuration therein, which also has information on the RS resource configuration for all mobility-candidate cells.

As explained above, the steps 6., 7., 8., and 9. of the First Variant are provided so that the gNB-CU obtains an updated communication configuration of the serving gNB, that should typically be generated by the serving gNB-DU. This updated communication configuration of the serving gNB carries the content of the updated RS-resource-configuration list. The UE can be provided with the RS resource configurations of cells of both the serving gNB-DU and the candidate gNB-DU in steps 10. and 11. This facilitates the mobility procedure, because the UE knows the reference signals of all the candidate cells in the serving gNB-DU and the candidate gNB-DU.

On the other hand, steps 10. and 11. are also provided to carry the communication configuration of the new candidate gNB-DU to the UE. This also facilitates the mobility procedure, because, the UE, when eventually switching to the candidate cell of the candidate gNB-DU, already has all the information to connect to that candidate cell and the candidate gNB-DU without the need to involve the higher layers terminated at the gNB-CU.

In the above-explained improved mobility procedure according to the First Variant of the First solution, it was described how in steps 7. and 8. the serving gNB-DU, updates its measurement configuration and its communication configuration so as to include the RS resource configuration of both itself and of the candidate gNB-DU. In one example implementation, which can be combined with any of the other described implementations, these updating processes can be implemented in the same or similar manner as known for inter-cell beam management (ICBM) of 3GPP Rel. 17.

According to one example of Rel. 17 ICBM, the reference signals of neighbouring cells are included in the measurement resource set configuration by the serving cell. There are different ways, e.g. differing between the reference signal SSB and CSI-RS.

For SSB, the IE *CSI-SSB-ResourceSet* has the parameter "*ServingAdditionalPCIIndex-r17*", which provides the non-serving cell IDs to the SSB. An example thereof is presented below as obtained from 3GPP TS 38.331, section 6.3.2:

### CSI-SSB-ResourceSet

The IE CSI-SSB-ResourceSet is used to configure one SS/PBCH block resource set which refers to SS/PBCH as indicated in *ServingCellConfigCommon* and *ServingCellConfig.*

### CSI-SSB-ResourceSet information element

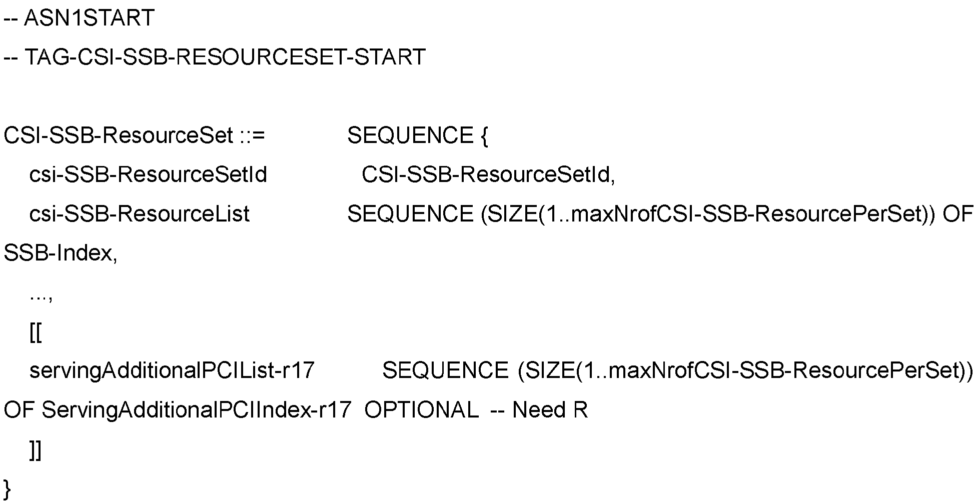

| ***CSI*-*SSB*-*ResourceSet* field descriptions** |
|---|
| ***servingAdditionalPCIList*** |
| Indicates the physical cell IDs (PCI) of the SSBs in the *csi-SSB-ResourceList.* If present, the list has the same number of entries as *csi-SSB-ResourceList.* The first entry of the list indicates the value of the PCI for the first entry of *csi-SSB-ResourceList,* the second entry of this list indicates the value of the PCI for the second entry of *csi-SSB-ResourceList,* and so on. For each entry, the following applies: |
| - If the value is zero, the PCI is the PCI of the serving cell in which this *CSI-SSB-ResourceSet* is defined; |
| - otherwise, the value is *additionalPCIIndex-r17* of an *SSB-MTC-AdditionalPCI-r17* configured using the *additionalPCI-ToAddModList-r17* in *ServingCellConfig,* and the PCI is the *additionaIPCI-r17* in this *SSB-MTC-AdditionalPCI-r17.* |

For the CSI-RS, the UE can be configured with a CSI-RS under its serving cell, which has a QCL (Quasi Co-located) relation to an SSB beam of a neighbouring cell. This can be done by providing a QCL resource using the parameter "TCI-State". In one example, in the IE *NZP-CSI-RS-Resource,* there is a field *TCI-StateID,* which points to an *additionaIPCI-r17,* where the non-serving cell ID can be indicated for an SSB to be used as the QCL source of the concerned CSI-RS.

Examples of the *NZP-CSI-RS-Resource* IE and the TCI-Sate IE are presented below as obtained from 3GPP TS 38.331, section 6.3.2:

### - NZP-CSI-RS-Resource

The IE *NZP-CSI-RS-Resource* is used to configure Non-Zero-Power (NZP) CSI-RS transmitted in the cell where the IE is included, which the UE may be configured to measure on (see TS 38.214 [19], clause 5.2.2.3.1). A change of configuration between periodic, semi-persistent or aperiodic for an *NZP-CSI-RS-Resource* is not supported without a release and add.

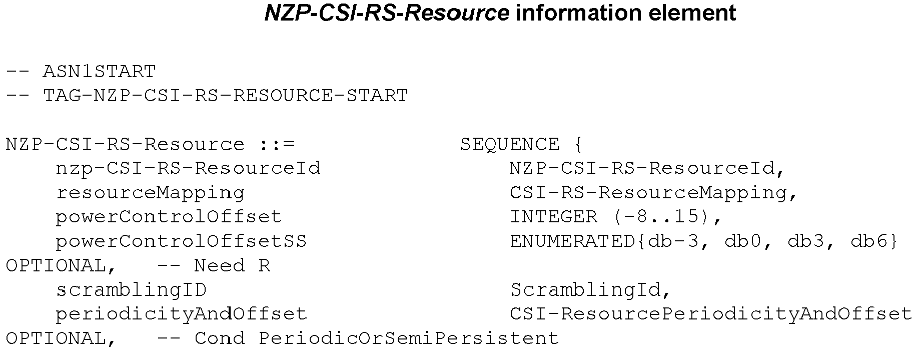

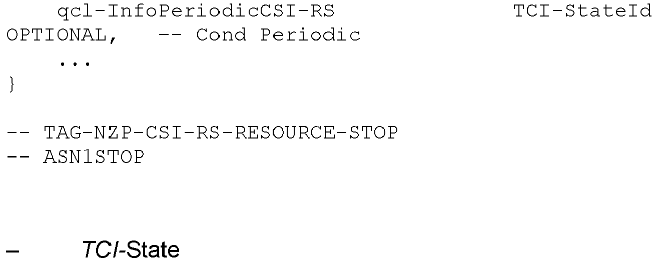

The IE *TCI-State* associates one or two DL reference signals with a corresponding quasi-colocation (QCL) type.

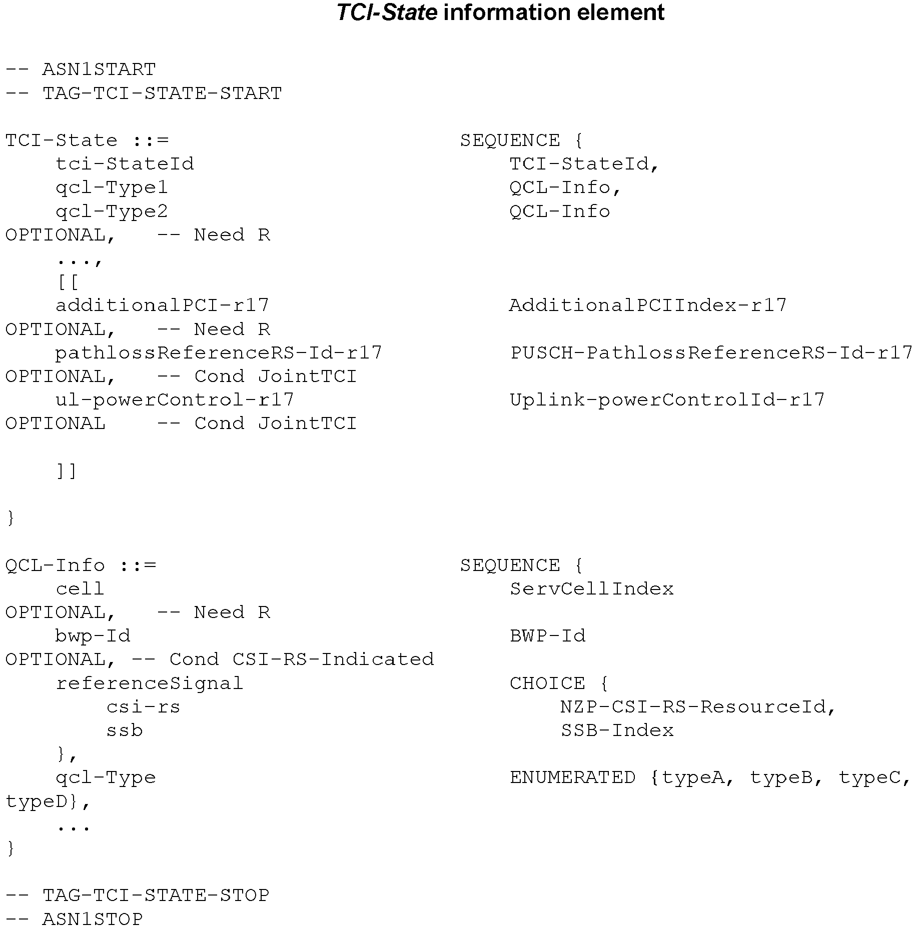

In the above-explained improved mobility procedure according to the First Variant of the First solution, it was described how in step 9., the updated communication configuration of the serving gNB-DU is transmitted back to the gNB-CU. In one example implementation, which can be combined with any of the other described implementations, this transmission may be implemented by transmitting the IE *CellGroupConfig,* known from 3GPP, which is generated by the serving gNB-DU. The updated *CellGroupConfig* IE of the serving gNB-DU is then transparently (transparent to the gNB-CU, meaning that the *CellGroupConfig* IE is not required to be interpreted by the gNB-CU) signalled to the UE via steps 10. and 11., e.g. wherein in step 10. a message is transmitted based on a higher layer, e.g. RRC, terminated between the gNB-CU and the UE. In step 11., the higher-layer message with the updated *CellGroupConfig* IE is simply forwarded from the serving gNB-DU to the UE. As one example, the RRC message could be an RRCReconfiguration message.

As mentioned above, steps 10. and 11. are also provided to carry the communication configuration of the new candidate gNB-DU to the UE. Similarly, the communication configuration can be implemented by the IE *CellGroupConfig,* which is obtained from the new candidate gNB-DU via step 3.The advantage of such an implementation is that the gNB-CU can simply forward such a container without the need for interpreting the content of *CellGroupConfig.*

Note that in the above explanation related to Fig. 15, it is exemplarily assumed that the RS resource configuration of the serving gNB-DU is already available at the gNB-CU. Such information can be obtained before step 1. of Fig. 15, for instance when the communication is established between the serving gNB-DU and the gNB-CU.

Or alternatively, such information on the RS resource configuration of the serving gNB-DU can be obtained in step.9 of Fig. 15, which would then involve that the serving gNB-DU separately generates a RS resource configuration of its own cells and sends such information back to gNB-CU, in the similar way as in step 3. of Fig. 15. In the latter case, the current list of available RS resource configurations (if included) in step 1., will not include the RS configuration of the serving gNB-DU. Besides, the updated list of RS resource configurations transmitted from gNB-CU to the serving gNB-DU in step 6. will not include the RS configuration of the serving gNB-DU as well. This would not be an issue for the serving gNB-DU to update the serving gNB-DU communication configuration in step 8., because the serving gNB-DU is responsible for the RS configuration of its own cells and therefore has all necessary information of RS configuration of its own cells.

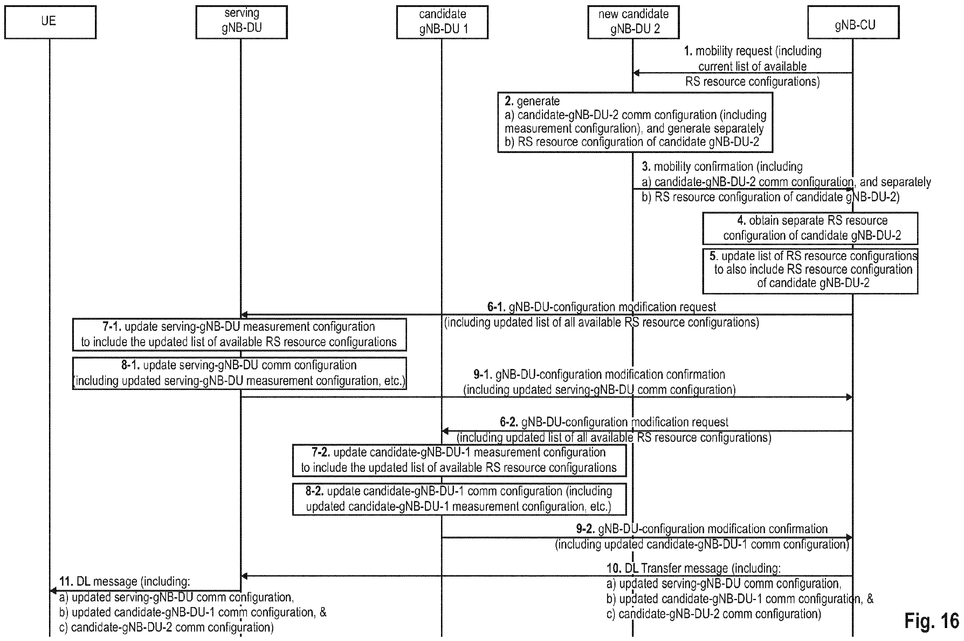

Fig. 16 illustrates the First Variant of the First Solution when a further cell (e.g. of yet another candidate gNB-DU-2) is to be added to the candidate cell list of the UE. In more detail, one cell of another candidate gNB-DU-2 is detected as a potential candidate for a cell switch, the gNB-DU-2 being different from the prior gNB-DU (see Fig. 15 e.g. gNB-DU-1) and different from the serving gNB-DU. Fig. 16 is based on preceding Fig. 15, extended to illustrate the new candidate gNB-DU-2.

Fig. 16 illustrates how steps 1. to 5. are again performed in connection now with the new candidate gNB-DU-2, as was explained in detail above. Steps 1., 2., and 3. are provided to obtain the communication configuration of the new candidate gNB-DU-2, which is then forwarded to the UE in step 10. (content c) thereof). This facilitates the mobility procedure, because, the UE, when eventually switching to the candidate cell of the new candidate gNB-DU-2, already has all the information to connect to that candidate cell and the candidate gNB-DU-2.

Fig. 16 also illustrates, how after the update of the RS-resource-configuration list at the gNB-CU, the updated RS-resource-configuration list has to be further propagated to the remaining two gNB-DUs, in this case the serving gNB-DU and the candidate gNB-DU-1. In particular, steps 6-1. to 9-1. are provided so as to again update the communication configuration for the serving gNB-DU, similar to Fig. 15. Furthermore, steps 6-2. to 9-2. are additionally provided so as to update the communication configuration for gNB-DU-1.

The reason is that the each gNB-DU, involved in the lower-layer mobility according to the First Variant of the First Solution, is required to generate a communication configuration, particularly a measurement configuration as part of the communication configuration, which includes the up-to-date RS-resource-configuration list. The communication configuration already obtained from the new candidate gNB-DU-2 can be prepared by the gNB-DU-2 so as to include the up-to-date RS-resource-configuration list, because gNB-DU-2 receives it at the time of generating its communication configuration.

Then, all these updated communication configurations are to be provided to the UE (see steps 10. and 11.).

As a consequence, every time the RS-resource-configuration list changes (e.g. due to the addition of a new candidate cell), the updated RS-resource-configuration list has to be propagated to any remaining gNB-DU, as explained above. The steps 6. to 9. have to be repeated often, which creates a lot of signaling overhead on the interface between the gNB-DUs, the gNB-CUs and also on the interface towards the UE. This disadvantage is exacerbated with an increasing number of gNB-DUs participating in the lower-layer mobility of a UE.

As explained above for the First Variant of the First Solution, each gNB-DU (including the serving gNB-DU as well as all candidate gNB-DUs) has the functionality of receiving a list of RS resource configurations from the gNB-CU and then creating an up-to-date and complete list of RS resource configurations by adding its own RS resource configuration for the new candidate cells participating in mobility. This complete list of RS resource configuration is then used to create the measurement configuration, and then the communication configuration of the gNB-DU.

Furthermore, the gNB-DU according to the First Variant of the First Solution has the functionality of participating in the cell switch preparation by transmitting its own RS resource configuration to the gNB-CU, which is responsible for maintaining an up-to-date and complete RS-resource-configuration list. Alternatively, instead of transmitting only its own RS resource configuration, the gNB-DU could transmitted the updated RS-resource-configuration list, prepared for generating its own measurement configuration, to the gNB-CU. In this alternative case, the gNB-CU might not have to perform the updating process itself but simply adopts the received updated RS-resource-configuration list.

Thus, the First Variant of the improved mobility procedure provides at least an improved distributed unit of a base station (e.g. the serving BS-DU, or a candidate BS-DU), as will be discussed below.

One exemplary BS-DU includes the following. A receiver of the BS-DU receives, from a central unit of the base station, a mobility request for participating in mobility for a user equipment, UE. The mobility request, or another message received by the receiver, includes a list having information on the RS resource configuration of at least a BS-DU serving the UE, wherein the serving-BS-DU RS-resource configuration relates to a candidate cell of the serving BS-DU. A processing circuitry of the BS-DU updates the received RS-resource-configuration list with an RS resource configuration of the BS-DU relating to a candidate cell of the BS-DU. A transmitter of the BS-DU the RS-resource-configuration of the BS-DU or alternatively the updated RS-resource-configuration list to the BS-CU.

Furthermore, each gNB-DU has the functionality to re-generate a measurement configuration, and correspondingly a communication configuration, with an up-to-date and complete list of RS resource configurations, even after the initial configuration. Corresponding, the improved BS-DU would be provided such that the receiver of the BS-DU receives, from the BS-CU, a modification request, including an updated list of RS resource configurations having an RS resource configuration of another mobility-candidate BS-DU further to the RS resource configuration of the serving BS-DU and of the BS-DU. The processing circuitry of the BS-DU generates an updated communication configuration of the BS-DU, based on the updated RS-resource-configuration list received from the BS-CU in the modification request. The transmitter of the BS-DU transmits the generated updated BS-DU communication configuration to the BS-CU.

### Second Variant -

As already mentioned above, the Second Variant of the First Solution uses a new type of measurement configuration, which does not necessarily include the RS resource configuration of the respective gNB-DU. The RS resource configuration of a gNB-DU is rather provided separately from the measurement configuration of said gNB-DU. Also the up-to-date and complete list of RS resource configurations is separate from the measurement configuration of a gNB-DU, such that they may be used together. According to one example of the Second Variant, communication configuration (in one example the measurement configuration) of a gNB-DU includes a pointer to another, external, RS resource configuration, The pointer facilitates mapping the measurement configuration of the gNB-DU (included in the communication configuration of the gNB-DU) to the separate RS resource configuration or list of RS resource configurations.

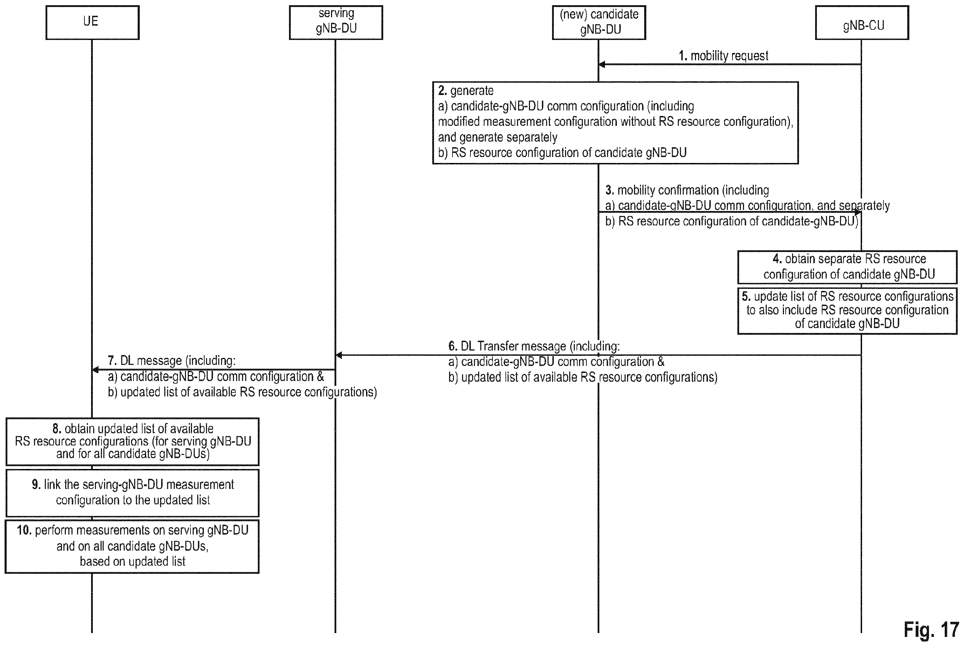

This new type of measurement configuration, and consequently also the new type of communication configuration (including the measurement configuration), can be used for all gNBs involved in mobility for the UE. Therefore, also the communication configuration for the serving gNB-DU, in particular its measurement configuration, does not include the RS resource configuration for its cells. Instead, the serving gNB-DU RS resource configuration is provided separately and then can be used by the UE together with the measurement configuration e.g. in the process of measuring cell(s) of the serving gNB-DU and reporting the measurement results to the serving gNB-DU. Correspondingly, for the following discussion in connection with Fig. 17 it is exemplarily assumed that the UE is already configured for operation with the serving gNB-DU, and thus includes the new type of measurement configuration without itself including a usable RS-resource configuration. The UE instead has access to the RS-resource configuration for cell(s) of the serving gNB-DU separately.

One more detailed implementation of the First Solution of the improved mobility procedure will be described for the Second Variant in connection with **Fig. 17****,** which can be considered to illustrate how to perform the cell switch preparation as initially discussed in connection with Fig. 11. In more detail, it is illustrated how the lower-layer mobility of the UE can be extended to cover a new candidate gNB-DU and its cell. The cell to be added to the candidate-cell list of the UE belongs to a candidate gNB-DU different from the serving gNB-DU. One object of the cell switch preparation involves that the UE is provided with suitable information on the reference signals of the candidate cells of the new candidate gNB-DU.

For reasons of simplicity, it is again exemplarily assumed that the new candidate gNB-DU has one cell for which the preparation has to be performed. However, the Second Variant of the First Solution is equally applicable to a scenario where the new candidate gNB-DU has more than one cell for which the preparation has to be performed. In such a case, the cell switch preparation covers the plural candidate cells of the candidate gNB-DU DU (a subset or full set of cells of the candidate gNB-DU).

In step 1., the gNB-CU transmits a mobility request message to the new candidate gNB-DU, requesting it to participate in the lower-layer mobility of the UE. Compared to the First Variant, there is no need to provide the new candidate gNB-DU with a current RS-resource-configuration list, because the communication configuration to be prepared by the new candidate gNB-DU will not include an RS resource configuration anyway.

In step 2., the candidate gNB-DU generates a communication configuration for itself, the communication configuration being different compared to the First Variant in that it does not include the RS resource configuration for the candidate gNB-DU (e.g. relating to its one cell). The candidate gNB-DU however generates the RS resource configuration for its candidate cell separately, e.g. outside the communication configuration.

In step 3., the candidate gNB-DU transmits a suitable confirmation message to the gNB-CU, including the thus generated items: the new type of candidate-gNB-DU communication configuration and separately the RS resource configuration of the candidate gNB-DU.

In step 4., the gNB-CU obtains the RS resource configuration of the candidate gNB-DU, and then, in step 5., the gNB-CU updates a current list of RS resource configurations so as to also include the received RS resource configuration of the candidate gNB-DU. The resulting updated and now-complete list would thus include RS-resource configurations for cells relating to the serving gNB-DU and the candidate gNB-DU.

In step 6., the gNB-CU now transfers the received communication configuration of the candidate gNB-DU as well as the generated updated RS resource configuration list to the serving gNB-DU. The serving gNB-DU forwards the received information to the UE (step 7.).

Consequently, the UE receives in step 8. the RS-resource-configuration list and thus has the necessary information on the reference signals transmitted on the new candidate cell of the candidate gNB-DU. The previous RS resource configuration list at the UE for instance may have only included information on the reference signals of the serving gNB-DU. The UE then makes a link between the received updated RS-resource configuration and the measurement configuration of the serving gNB-DU.

This updated RS-resource-configuration list can thus be used together with the measurement configuration of the serving gNB-DU, so as to perform the measurements on the cells as configured, e.g. of the serving gNB-DU and the new candidate gNB-DU (steps 9. and 10.).

Although not illustrated in Fig. 17, the UE can report the results of the measurements to the serving BS-DU, as part of the lower-layer mobility, as already discussed above in connection with Fig. 11.

As mentioned for the above exemplary implementation, in order to use the updated RS-resource-configuration list together with the measurement configuration of the serving gNB-DU, the UE links the measurement configuration of the serving gNB-DU to the updated RS-resource-configuration list. This can be achieved e.g. by ignoring the previous RS-resource-configuration list and by then instead using the updated RS-resource-configuration list. Put differently, the previous RS-resource-configuration of the serving-gNB-DU measurement configuration is overwritten by the new updated RS-resource-configuration list, newly generated by the UE.

In one example, the measurement configuration of the serving gNB-DU includes a pointer to an, external, RS resource configuration, which in this case is the RS-resource-configuration list which is kept updated by the gNB-CU (which also is responsible for transmitted the updated RS-resource-configuration list towards the UE).

As explained above, the steps 3., 4., and 5. of the Second Variant are provided so that the gNB-CU generates an updated RS-resource-configuration list for the UE. The UE can be provided with the RS resource configurations of cells of both the serving gNB-DU and the candidate gNB-DU in steps 6. and 7. This facilitates the mobility procedure, because the UE knows the reference signals of all the candidate cells in the serving gNB-DU and the candidate gNB-DU.

Steps 6. and 7. are also provided to carry the communication configuration of the new candidate gNB-DU to the UE. This also facilitates the mobility procedure, because, the UE, when eventually switching to the candidate cell of the candidate gNB-DU, would follow the communication configuration of the candidate-gNB-DU and thus has all the information to connect to that candidate cell and the candidate gNB-DU without the need to involve the higher layers terminated at the gNB-CU.

By introducing a separation of the RS resource configuration of a gNB-DU from the measurement configuration of said gNB-DU, the Second Variant has the benefit compared to the First Variant that the gNB-CU can keep updating the RS resource configurations without the need to request every gNB-DU to re-generate the respective measurement configuration and communication configuration.

Compared to the First Variant of the First Solution, the above Second Variant has the benefit that the above-noted propagation problem does not occur. In particular, according to the Second Variant, when a further cell (e.g. of yet another candidate gNB-DU-2) is to be added to the candidate cell list of the UE, conceptually the same steps 1. to 9. are to be performed. In more detail, one cell of another candidate gNB-DU-2 is detected as a potential candidate for a cell switch, the gNB-DU-2 being different from the prior candidate gNB-DU (see Fig. 17 e.g. candidate gNB-DU-1) and different from the serving gNB-DU. The steps 1. to 5. are again performed, so as to provide the gNB-CU with the separate RS resource configuration for the new candidate cell of gNB-DU-2 and to update the current list of RS resource configurations, to also include the just-received RS resource configuration for the new candidate cell of gNB-DU-2. This updated RS-resource-configuration list is then transmitted to the serving gNB-DU of the UE and then further to the UE, in line with steps 6. and 7.

Furthermore and in parallel, the communication configuration of the new candidate gNB-DU-2 cell is provided to the gNB-CU and then to the UE as well, performing steps 2. to 7.

The UE obtains the updated RS-resource-configuration list to use it, instead of the previous RS-resource-configuration list, for the mobility procedure, particularly for performing the measurements, according to step 10., on the cells of the serving gNB-DU, of the candidate gNB-DU-1, and of the candidate gNB-DU-2.

As explained, the Second Variant is based on the use of a communication configuration, of gNB-DUs, where the measurement configuration itself does not include a (usable) RS resource configuration of the respective gNB-DU (and its cell to which it relates). Instead, an external and separate list of RS resource configuration(s) is maintained and kept up-to-date so as to be then flexibly used by the UE in combination with this modified measurement configuration.

Therefore, the respective new candidate gNB-DU-1 and gNB-DU-2 generate their communication configurations with the modified measurement configuration (without a usable RS resource configuration), such that the communication configurations are independent of the (updated) content of the RS-resource-configuration list.

Compared to the First Variant of the First Solution, it is thus not necessary to propagate the up-to-date RS-resource-configuration list to the already existing gNB-DU that participate in the UE mobility, every time a new cell is added to the RS-resource-configuration list. In particular, steps corresponding to the steps 6., 7., 8., and 9. of Fig. 16 for the First Variant of the First Solution are not necessary according to the Second Solution.

As explained above for the Second Variant of the First Solution, each gNB-DU (including the serving gNB-DU as well as all candidate gNB-DUs) has the functionality to create a new type of measurement configuration, which does not necessarily include the RS resource configuration of the respective gNB-DU.

Correspondingly, the Second Variant of the First Solution of the improved mobility procedure provides at least an improved distributed unit of a base station (e.g. the serving BS-DU, or a candidate BS-DU), as will be discussed below.

One exemplary BS-DU includes the following. A receiver of the BS-DU receives, from a central unit of the base station, a mobility request for participating in mobility for a user equipment, UE. A processing circuitry of the BS-DU generates a communication configuration of the BS-DU, wherein the BS-DU communication configuration does not include a reference signal, RS, resource configuration of the BS-DU. A transmitter of the BS-DU transmits the BS-DU communication configuration to the BS-CU.

As explained above for the Second Variant of the First Solution, the UE has the functionality to repeatedly receive an updated list of RS resource configurations, and then uses the most recently received RS-resource-configuration list, instead of an outdated RS-resource-configuration list, together with a measurement configuration to perform the measurements on different cells. Further, the UE is able to handle the new type of measurement configuration according to this Second Variant, which does not necessarily include the RS resource configuration of the respective gNB-DU.

Correspondingly, the Second Variant of the First Solution of the improved mobility procedure provides at least an improved UE, as will be discussed below.

One exemplary UE includes the following. A processing circuitry of the UE has access to a communication configuration of a base station serving the UE, serving BS-DU. The serving-BS-DU communication configuration includes a measurement configuration of the serving BS-DU that does not include a reference-signal, RS, resource configuration of the serving BS-DU. The processing circuitry of the UE has access to a list of one or more RS resource configurations, including the RS resource configuration of at least the serving BS-DU, wherein the RS resource configuration relates to a candidate cell of the serving BS-DU. A receiver of the UE receives, from the serving BS-DU, an updated list of one or more RS resource configurations. The updated RS-resource-configuration list includes the RS resource configuration of the serving BS-DU and of a BS-DU being a candidate for participating in mobility for the UE. The processing circuitry of the UE uses the updated RS-resource-configuration list together with the measurement configuration of the serving BS-DU.

The improved UE according to the Second Variant has also the ability to handle a pointer included in the communication configuration of a gNB-DU (in one example, included in the measurement configuration of the communication configuration), wherein the pointer points to an external RS resource configuration, such as the above-mentioned RS-resource-configuration list which is kept updated.

In the above explained implementations of the improved mobility procedure according to the First and Second Variant of the First Solution, it was described how a list of RS resource configurations can be maintained by the gNB-CU. Further implementations of the improved mobility procedure, which can be combined with any of the other described implementations, described how the RS-resource-configuration list can be exemplarily implemented.

The RS-resource-configuration list can be implemented as an Information Element, e.g. denoted "LTM-L1-MeasResourceSetList", which may contain at least a set of SSBs (and optionally a set of CSI-RSs) for the L1-measurements of each candidate cell of a gNB-DU. The *LTM-L1-MeasResourceSetList* IE can be defined e.g. as follows:

| **IE/Group Name** | **Presence** | **Range** | **IE Type and Reference** | **Semantics Description** |
|---|---|---|---|---|
| Measurement Resource Set List | | 1..< maxNrofResource SetPerList> | | |
| >Resource set ID | M | | | To uniquely identify each resource set in the list. |
| >Cell Identifier | M | | It could be NR Cell Global Identifier (CGI), or NR Physical Cell ID (PCI) | LTM candidate cell. One cell can have one or multiple resource sets |
| >SSB-to-Measure | M | | It could be IE SSB-*toMeasure* or CSI-*SSB-ResourceSet* defined in TS 38.331 | |
| >NZP-CSI-RS-ResourceSet | O | | This IE is defined in TS 38.331 | |

The above IE *LTM-L1-MeasResourceSetList* can be transmitted as the otherwise-denoted RS-resource-configuration list, in particular
- for the First Variant of the First solution:
   ∘ in step 6. of Fig. 15
- for the Second Variant of the First solution:
   ∘ in steps 6. and 7. of Fig. 17

In the above-explained Second Variant of the First Solution, the updated RS-resource-configuration list is transferred from the gNB-CU to the serving gNB-DU of the UE and further to the UE (see steps 6. and 7. of Fig. 17). In one example, the updated RS-resource-configuration list can be included in a higher-layer message, such as the RRCReconfiguration message.

According to the following example, the updated RS-resource-configuration can be defined as follows:

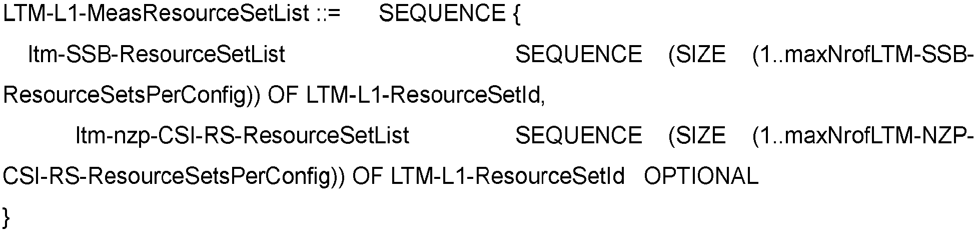

Accordingly, the LTM-L1-MeasResourceSetList can indicate to one or more LTM-L1-ResourceSets identified by the LTM-L1-ResourceSetlDs, wherein each LTM-L1-ResourceSet could be defined e.g. as follows:

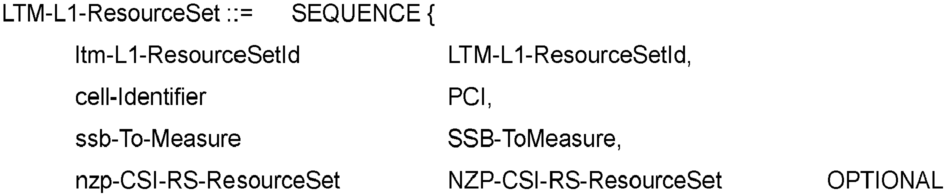

In the above-explained Second Variant of the First Solution, the measurement configuration does not itself include the RS resource configuration, but may e.g. include a pointer, which is used to point to a separate RS-resource-configuration list (see e.g. above LTE-L1-MeasResourceSetList). To said end, a new IE "CSI-ResourceConfig-r18" could be used defined as follows:

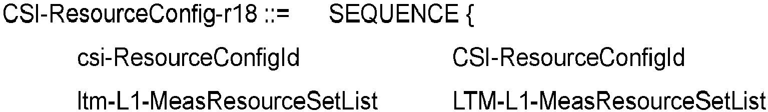

As apparent, it defines a resource configuration for CSI, having an ID (here "CSI-ResourceConfiglD") and having the pointer, that allows to establish a link to the separate RS-resource-configuration list, LTE-L1-MeasResourceSetList.

### Second Solution - UE maintains updated RS-resource-configuration list

As presented above, the Second Solution is based on that the UE is mainly responsible to maintain an updated and complete list of RS resource configurations, e.g. for the current serving gNB-DU of the UE as well as all the candidate gNB-DUs possible for a possible cell switch. The UE thus has all the information necessary regarding the RS resource configurations so as to proceed with the lower-layer mobility, including particularly with performing the measurements by the UE of cells of its current serving gNB-DU as well as of cells of other (candidate gNB-DUs).

In more detail, the Second Solution of the improved mobility procedure provides an improved UE, as will be discussed below.

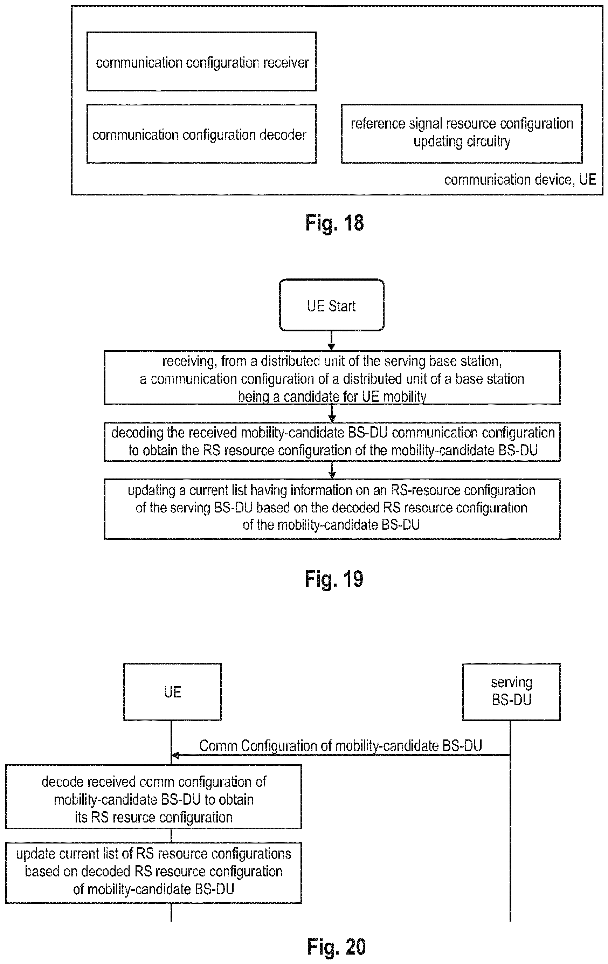

**Fig. 18** illustrates a simplified and exemplary UE structure according to an exemplary implementation of the Second Solution of the improved mobility procedure, which can be implemented based on the general UE structure explained in connection with Fig. 10. The various structural elements of the UE illustrated in said Fig. 18 can be interconnected between one another e.g., with corresponding input/output nodes (not shown) e.g., in order to exchange control and user data and other signals. Although not shown for illustration purposes, the UE may include further structural elements.

As apparent from Fig. 18, the UE may include a communication configuration receiver, a communication configuration decoder, and a reference signal resource configuration updating circuitry.

In the present case, the receiver of the UE can thus be exemplarily configured to at least partly perform receiving of a communication configuration from a BS-DU etc.

In the present case as will become apparent from the below disclosure, the processing circuitry of the UE can thus be exemplarily configured to at least partly perform one or more of decoding the received communication configuration and updating a list of reference signal resource configurations, etc.

In the present case as will become apparent from the below disclosure, the transmitter of the UE can thus be exemplarily configured to at least partly perform one or more of a measurement report, etc.

One exemplary procedure as will be disclosed in more detail further below is implemented by a UE that includes the following. A receiver receives, from a distributed unit of a base station serving the UE, serving BS-DU, a communication configuration of a BS-DU being a candidate for participating in mobility of the UE. A processing circuity of the UE decodes the received mobility-candidate-BS-DU communication configuration to obtain a reference signal, RS, resource configuration of the mobility-candidate BS-DU relating to a candidate cell of the mobility-candidate BS-DU. The processing circuitry updates a current list having information on an RS-resource configuration of at least the serving BS-DU, based on the decoded RS-resource configuration of the mobility-candidate BS-DU.

A corresponding exemplary method comprises the following steps performed by a UE:
receiving, from a distributed unit of a base station serving the UE, serving BS-DU, a communication configuration of a BS-DU being a candidate for participating in mobility of the UE,
decoding the received mobility-candidate-BS-DU communication configuration to obtain a reference signal, RS, resource configuration of the mobility-candidate BS-DU relating to a candidate cell of the mobility-candidate BS-DU, and
updating a current list having information on an RS-resource configuration of at least the serving BS-DU, based on the decoded RS-resource configuration of the mobility-candidate BS-DU.

A corresponding sequence diagram for an exemplary UE behaviour in line with the above-discussed UE and UE method is illustrated in **Fig. 19****.**

**Fig. 20** is a signaling diagram of an exemplary and simplified implementation of the improved mobility procedure according to the Second Solution, illustrating the exchange of messages between the different participating entities (here the UE and its serving gNB-DU) and the steps performed at these entities.

The above-described mobility procedure thus achieves the object and overcomes some of the drawbacks explained above. The Second Solution is simple and can provide the UE with the necessary information on the reference signals of cells of another BS-DU.

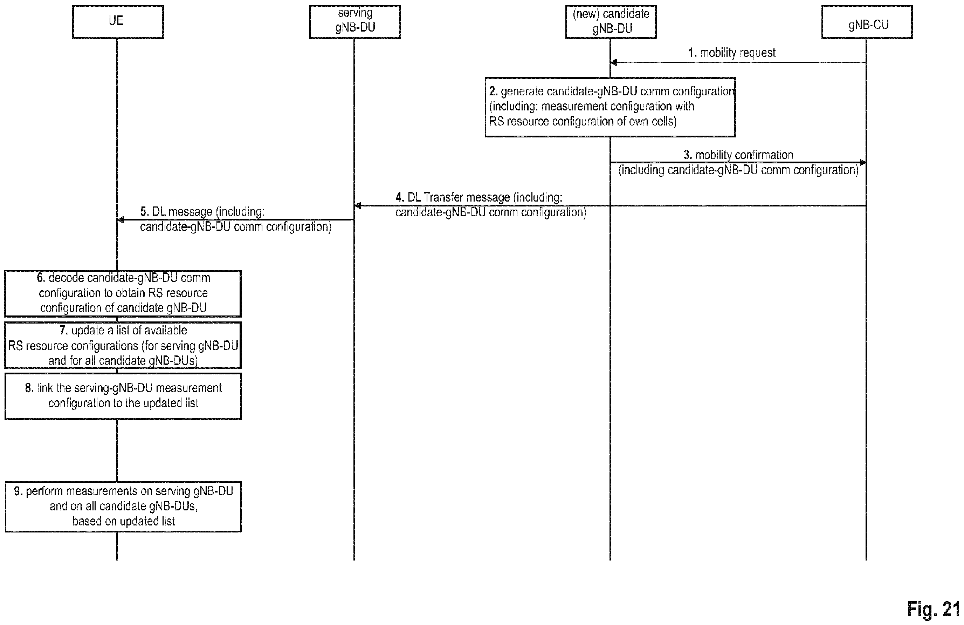

One more detailed implementation of the Second Solution of the improved mobility procedure will be described in connection with **Fig. 21****,** which can be considered to illustrate how to perform the cell switch preparation as initially discussed in connection with Fig. 11. In more detail, it is illustrated how the lower-layer mobility of the UE can be extended to cover a new candidate gNB-DU and its cell. The cell to be added to the candidate-cell list of the UE belongs to a candidate gNB-DU different from the serving gNB-DU. One object of the cell switch preparation involves that the UE is provided with suitable information on the reference signals of the candidate cells of the new candidate gNB-DU.

For reasons of simplicity, it is exemplarily assumed that the new candidate gNB-DU has one cell for which the preparation has to be performed.

However, the Second Solution is equally applicable to a scenario where the new candidate gNB-DU has more than one cell for which the preparation has to be performed. In such a case, the cell switch preparation covers the plural candidate cells of the candidate gNB-DU (a subset or full set of cells of the candidate gNB-DU).

In order for the new candidate gNB-DU to participate in the lower-layer mobility of the UE, the gNB-CU transmits a mobility request message to the new candidate gNB-DU (step 1.). It is assumed that the candidate gNB-DU confirms that it participates in the UE lower-layer mobility. The new candidate gNB-DU thus generates (step 2.) a communication configuration usable by the UE to later connect to the cell of the candidate gNB-DU. This candidate-gNB-DU communication configuration includes a measurement configuration of the candidate gNB-DU, which in turn includes the reference signal resource configuration of the candidate gNB-DU, used by the candidate gNB-DU for transmitting reference signal in its cell.

The thus-generated candidate-gNB-DU communication configuration, with its contents, is transmitted back to the gNB-CU, as part of a suitable mobility confirmation message (step 3.).

Furthermore, the gNB-CU transmits the thus-received communication configuration of the candidate gNB-DU to the serving gNB-DU of the UE (step 4.). Then, the serving gNB-DU of the UE forwards the thus-received communication configuration of the candidate gNB-DU further to the UE (step 5.).

The UE is responsible of maintaining an up-to-date list of RS resource configurations of cells of the serving gNB-DU and the new candidate gNB-DU, and possibly of other candidate gNB-DU(s) added before.

Consequently, the UE decodes (step 6.) the received communication configuration of the new candidate gNB-DU and obtains therefrom the RS resource configuration of the new candidate gNB-DU (particularly of its cell). The UE updates (step 7.) the current RS-resource-configuration list to also include the thus decoded RS resource configuration of the new candidate gNB-DU.

This updated RS-resource-configuration list can then be used together with the measurement configuration of the serving gNB-DU, so as to perform the measurements on the cells as configured, e.g. of the serving gNB-DU and the new candidate gNB-DU (steps 8. and 9.).

Although not illustrated in Fig. 21, the UE can report the results of the measurements to the serving BS-DU, as part of the lower-layer mobility, as already discussed above in connection with Fig. 11.

According to an exemplary implementation, in order to use the updated RS-resource-configuration list together with the measurement configuration of the serving gNB-DU, the UE links the measurement configuration of the serving gNB-DU to the updated RS-resource-configuration list. This can be achieved e.g. by ignoring the previous RS-resource-configuration list and by then instead using the updated RS-resource-configuration list. Put differently, the previous RS-resource-configuration of the serving-gNB-DU measurement configuration is overwritten by the new updated RS-resource-configuration list, newly generated by the UE.

The Second Solution has a benefit in that the mobility procedure is simple. Furthermore, the Second Solution relies on signaling and mechanisms already defined in mobility procedures, such as the fetching of the communication configuration of a BS-DU and the forwarding of the communication configuration of a BS-DU towards the UE. Thus, no new signaling and mechanisms need to be defined at the various gNB-DUs and the gNB-CU and the interface (e.g. F1-interface in 3GPP) between them.

Compared to the First Variant of the First Solution, the above Second Solution has also the benefit that the above-noted propagation problem does not occur. In particular, according to the Second Solution, when further cells (e.g. of yet another candidate gNB-DU-2) are to be added to the candidate-cell list of the UE, conceptually the same steps 1. - 8. are to be performed. In more detail, one cell of another candidate gNB-DU-2 is detected as a potential candidate for a cell switch, the gNB-DU-2 being different from the prior candidate gNB-DU (see Fig. 21 e.g. candidate gNB-DU-1) and different from the serving gNB-DU. The steps 1. to 5. are again performed, so as to provide the UE with the communication configuration of the other new candidate gNB-DU-2 for the new candidate cell. In the steps 6., 7. and 8, the UE decodes the corresponding RS resource configuration relating to the new candidate cell of the candidate gNB-DU-2, and then correspondingly updates the current RS resource configuration list, so as to also include the RS resource configuration relating to the new candidate cell of the candidate gNB-DU-2, further to the already existent RS resource configurations for cells of the serving gNB-DU and the prior candidate gNB-DU-1.

Finally, the UE continues to perform the measurements in line with step 9., but in this case on the cells of serving gNB-DU, of the candidate gNB-DU-1, and of the candidate gNB-DU-2, using the up-to-date and complete list of RS resource configurations maintained at the UE.

Therefore, the respective new candidate gNB-DU-1 and gNB-DU-2 generate their communication configurations so as to only include the RS resource configuration of its own cells (different from the First Variant of the First Solution), such that the communication configurations are independent of the (updated) content of the RS-resource-configuration list.

Compared to the First Variant of the First Solution, it is thus not necessary to propagate the up-to-date RS-resource-configuration list to the already existing gNB-DU that participate in the UE mobility every time a new cell is added to the RS-resource-configuration list. In particular, steps corresponding to the steps 6., 7., 8., and 9. of Fig. 16 for the First Variant of the First Solution are not necessary according to the Second Solution.

On the other hand, the Second Solution requires the UE to perform the steps for maintaining an up-to-date list of RS resource configurations, which increases the UE computation complexity. For instance, the UE has to decode the communication configuration of all candidate cells (of gNB-DUs) so as to obtain the complete information of the RS resource configuration. According to the First Solution, the UE only has to decode one communication configuration to obtain the up-to-date list of the RS resource configurations (prepared by the gNB-CU).

### Further Aspects

According to a first aspect, base station central unit is provided that includes the following. A transmitter transmits a mobility request to a distributed unit of the base station, mobility-candidate BS-DU, being a candidate for participating in mobility for a user equipment, UE. A receiver of the BS-CU receives, from the mobility-candidate BS-DU, a reference signal, RS, resource configuration of the mobility-candidate BS-DU relating to a candidate cell of the mobility-candidate BS-DU. A processing circuitry of the BS-CU generates an updated list, the updated RS-resource-configuration list having information on the received RS-resource configuration of the mobility-candidate BS-DU and on a RS-resource configuration of at least a serving BS-DU serving the UE. The transmitter transmits content of the updated RS-resource configuration list to the serving BS-DU for further forwarding to the UE.

According to a second aspect provided in addition to the first aspect, the transmitter transmits the updated RS-resource-configuration list to the serving BS-DU of the UE. The receiver receives, from the serving BS-DU, an updated communication configuration of the serving BS-DU. The updated serving-BS-DU communication configuration has the content of the updated RS-resource-configuration list mapped to a measurement configuration of the serving BS-DU. The transmitting of the content on the updated RS-resource-configuration list involves forwarding the updated serving-BS-DU communication configuration to the serving BS-DU.

According to a third aspect provided in addition to the second aspect, the mobility request or another message, transmitted to the mobility-candidate BS-DU, includes the list having information on the RS resource configuration of at least the serving-BS-DU. The receiver receives, from the mobility-candidate BS-DU, a communication configuration of the mobility-candidate BS-DU. The transmitter forwards the received mobility-candidate-BS-DU communication configuration to the serving BS-DU for further forwarding to the UE. In an optional implementation, the mobility-candidate BS-DU communication configuration has content of an RS-resource-configuration list mapped to a measurement configuration of the mobility-candidate BS-DU. The mapped RS-resource-configuration list content includes the RS resource configuration of the serving-BS-DU and of the mobility-candidate BS-DU.

According to a fourth aspect provided in addition to the second or third aspect, the transmitter transmits another mobility request to another mobility-candidate BS-DU for participating in mobility for the UE; optionally, the other mobility request or a further message includes an RS-resource-configuration list for at least the serving BS-DU and the mobility-candidate BS-DU. The receiver receives, from the other mobility-candidate BS-DU, an RS resource configuration of the other mobility-candidate BS-DU relating to a candidate cell of the other mobility-candidate BS-DU. The processing circuitry updates the RS-resource-configuration list based on the received RS resource configuration of the other mobility-candidate BS-DU. The transmitter transmits the updated RS-resource-configuration list to the serving BS-DU. The receiver receives, from the serving BS-DU, an updated communication configuration of the serving BS-DU. The updated serving-BS-DU communication configuration has content of the updated RS-resource-configuration list mapped to a measurement configuration of the serving BS-DU. The transmitter forwards the received serving-BS-DU communication configuration to the serving BS-DU for forwarding to the UE. In an optional implementation, the transmitter transmits the updated RS-resource-configuration list to the mobility-candidate BS-DU. The receiver, in operation, receives, from the mobility-candidate BS-DU, an updated communication configuration of the mobility-candidate BS-DU, and the transmitter, in operation, forwards the received updated mobility-candidate-BS-DU communication configuration to the serving BS-DU for forwarding to the UE. In an optional implementation, the receiver receives, from the other mobility-candidate BS-DU, a communication configuration of the other mobility-candidate BS-DU. The transmitter transmits the received communication configuration of the other mobility-candidate BS-DU to the serving BS-DU for further forwarding to the UE.

According to a fifth aspect, provided in addition to the first aspect, the receiver receives, from the mobility-candidate BS-DU, a communication configuration of the mobility-candidate BS-DU, in response to the mobility request. The transmitter forwards the received mobility-candidate-BS-DU communication configuration to the serving BS-DU for further forwarding to the UE. The mobility-candidate-BS-DU communication configuration does not include an RS resource configuration of the mobility-candidate BS-DU. In an optional implementation, the mobility-candidate BS-DU communication configuration includes a pointer to the updated RS-resource-configuration list, transmitted to the serving BS-DU, so as to map the updated RS-resource-configuration list to a measurement configuration of the mobility-candidate BS-DU included in the mobility-candidate-BS-DU communication configuration.

According to a sixth aspect, provided in addition to the fifth aspect, the transmitter transmits another mobility request to another BS-DU for being a candidate for participating in mobility for the UE. The receiver receives, from the other mobility-candidate BS-DU, an RS resource configuration of the other mobility-candidate BS-DU relating to a candidate cell of the other mobility-candidate BS-DU, in response to the other mobility request. The processing circuitry updates a current RS-resource-configuration list, based on the received S resource configuration of the other mobility-candidate BS-DU. The transmitter transmits the updated RS-resource-configuration list to the serving BS-DU for further forwarding to the UE. In an optional implementation, the receiver receives a communication configuration of the other mobility-candidate BS-DU, in response to the other mobility request. The transmitter forwards the received communication configuration of the other mobility-candidate BS-DU to the serving BS-DU for further forwarding to the UE. The communication configuration of the other mobility-candidate BS-DU does not include an RS resource configuration of the other mobility candidate BS-DU.

According to a seventh aspect, a method is provided comprising the following steps performed by a central unit of a base station:
transmitting a mobility request to a distributed unit of the base station, mobility-candidate BS-DU, being a candidate for participating in mobility for a user equipment, UE,
receiving, from the mobility-candidate BS-DU, a reference signal, RS, resource configuration of the mobility-candidate BS-DU relating to a candidate cell of the mobility-candidate BS-DU,
generating an updated list, the updated RS-resource-configuration list having information on the received RS-resource configuration of the mobility-candidate BS-DU and on a RS-resource configuration of at least a serving BS-DU serving the UE, and
transmitting content of the updated RS-resource configuration list to the serving BS-DU for further forwarding to the UE.

According to an eighth aspect, an integrated circuit is provided, which, in operation, controls a process of a central unit of a base station, BS-CU, the process comprising the following steps performed by the BS-CU:
transmitting a mobility request to a distributed unit of the base station, mobility-candidate BS-DU, being a candidate for participating in mobility for a user equipment, UE,
receiving, from the mobility-candidate BS-DU, a reference signal, RS, resource configuration of the mobility-candidate BS-DU relating to a candidate cell of the mobility-candidate BS-DU,
generating an updated list, the updated RS-resource-configuration list having information on the received RS-resource configuration of the mobility-candidate BS-DU and on a RS-resource configuration of at least a serving BS-DU serving the UE, and
transmitting content of the updated RS-resource configuration list to the serving BS-DU for further forwarding to the UE.

According to a ninth aspect, a distributed unit of a base station, BS-DU, is provided comprising the following. A receiver of the BS-DU receives, from a central unit of the base station, a mobility request for participating in mobility for a user equipment, UE. The mobility request, or another message received by the receiver, includes a list having information on the RS resource configuration of at least a BS-DU serving the UE, wherein the serving-BS-DU RS-resource configuration relates to a candidate cell of the serving BS-DU. A processing circuitry of the BS-DU updates the received RS-resource-configuration list with an RS resource configuration of the BS-DU relating to a candidate cell of the BS-DU. A transmitter of the BS-DU transmits the RS-resource-configuration of the BS-DU or alternatively the updated RS-resource-configuration list to the BS-CU.

According to a tenth aspect provided in addition to the ninth aspect, the receiver receives, from the BS-CU, a modification request, including an updated list of RS resource configurations having an RS resource configuration of another mobility-candidate BS-DU further to the RS resource configuration of the serving BS-DU and of the BS-DU. The processing circuitry generates an updated communication configuration of the BS-DU, based on the updated RS-resource-configuration list received from the BS-CU in the modification request. The transmitter transmits the generated updated BS-DU communication configuration to the BS-CU.

According to an eleventh aspect, a distributed unit of a base station, BS-DU, is provided, comprising the following. A receiver of the BS-DU receives, from a central unit of the base station, a mobility request for participating in mobility for a user equipment, UE. A processing circuitry generates a communication configuration of the BS-DU, wherein the BS-DU communication configuration does not include a reference signal, RS, resource configuration of the BS-DU. A transmitter transmits the BS-DU communication configuration to the BS-CU.

According to a twelfth aspect, provided in addition to the eleventh aspect, the BS-DU communication configuration includes a pointer to a current list of one or more RS resource configurations usable to map the current RS-resource-configuration list to a measurement configuration of the BS-DU included in the BS-DU communication configuration.

According to a thirteenth aspect, provided in addition to the eleventh or twelfth aspect, the transmitter transmits an RS resource configuration of the BS-DU relating to a candidate cell of the BS-DU to the BS-CU.

According to a fourteenth aspect, a UE is provided comprising the following. A processing circuitry of the UE has access to a communication configuration of a base station serving the UE, serving BS-DU. The serving-BS-DU communication configuration includes a measurement configuration of the serving BS-DU that does not include a reference-signal, RS, resource configuration of the serving BS-DU. The processing circuitry has access to a list of one or more RS resource configurations, including the RS resource configuration of at least the serving BS-DU the RS resource configuration relating to a candidate cell of the serving BS-DU. A receiver of the UE receives, from the serving BS-DU, an updated list of one or more RS resource configurations. The updated RS-resource-configuration list includes the RS resource configuration of the serving BS-DU and of a BS-DU being a candidate for participating in mobility for the UE. The processing circuitry uses the updated RS-resource-configuration list together with the measurement configuration of the serving BS-DU.

According to a fifteenth aspect, provided in addition to the fourteenth aspect, the measurement configuration of the serving BS-DU includes a pointer to the updated RS-resource-configuration list. In an optional implementation, the receiver receives, from the serving BS-DU, a communication configuration of the mobility-candidate BS-DU. In an optional implementation, the processing circuitry performs measurements based on the updated RS-resource-configuration list and the measurement configuration of the serving BS-DU. Ina further optional implementation, the UE comprises a transmitter, which transmits a measurement report with results of the measurements to the serving BS-DU.

According to a sixteenth aspect, a method is provided comprising the following steps performed by a user equipment, UE:
accessing a communication configuration of a base station serving the UE, serving BS-DU, wherein the serving-BS-DU communication configuration includes a measurement configuration of the serving BS-DU that does not include a reference-signal, RS, resource configuration of the serving BS-DU,
accessing a list of one or more RS resource configurations, including the RS resource configuration of at least the serving BS-DU, the RS resource configuration relating to a candidate cell of the serving BS-DU,
receiving, from the serving BS-DU, an updated list of one or more RS resource configurations, the updated RS-resource-configuration list including the RS resource configuration of the serving BS-DU and of a BS-DU being a candidate for participating in mobility for the UE, and
using the updated RS-resource-configuration list together with the measurement configuration of the serving BS-DU.

According to a seventeenth aspect, an integrated circuit is provided, which, in operation, controls a process of a user equipment, the process comprising the following steps performed by the UE:
accessing a communication configuration of a base station serving the UE, serving BS-DU, wherein the serving-BS-DU communication configuration includes a measurement configuration of the serving BS-DU that does not include a reference-signal, RS, resource configuration of the serving BS-DU,
accessing a list of one or more RS resource configurations, including the RS resource configuration of at least the serving BS-DU, the RS resource configuration relating to a candidate cell of the serving BS-DU,
receiving, from the serving BS-DU, an updated list of one or more RS resource configurations, the updated RS-resource-configuration list including the RS resource configuration of the serving BS-DU and of a BS-DU being a candidate for participating in mobility for the UE, and
using the updated RS-resource-configuration list together with the measurement configuration of the serving BS-DU.

According to an eighteenth aspect, a UE is provided comprising the following. A receiver receives, from a distributed unit of a base station serving the UE, serving BS-DU, a communication configuration of a BS-DU being a candidate for participating in mobility of the UE. A processing circuity of the UE decodes the received mobility-candidate-BS-DU communication configuration to obtain a reference signal, RS, resource configuration of the mobility-candidate BS-DU relating to a candidate cell of the mobility-candidate BS-DU. The processing circuitry updates a current list having information on an RS-resource configuration of at least the serving BS-DU, based on the decoded RS-resource configuration of the mobility-candidate BS-DU.

According to a nineteenth aspect, provided in addition to the eighteenth aspect, the processing circuitry maps the updated RS-resource-configuration list to a measurement configuration of the serving BS-DU. In an optional implementation, the mapping includes ignoring a current RS-resource configuration list and instead using the updated RS-resource-configuration list in connection with the serving-BS-DU measurement configuration.

According to a 20^{th} aspect, provided in addition to the eighteenth or nineteenth aspect, the receiver receives, from the serving BS-DU, a communication configuration of another mobility-candidate BS-DU. The processing circuity decodes the received other-mobility-candidate-BS-DU communication configuration to obtain an RS resource configuration of the other mobility-candidate BS-DU relating to a candidate cell of the other mobility-candidate BS-DU. The processing circuitry updates the current RS-resource-configuration list based on the decoded RS-resource configuration of the other mobility-candidate BS-DU. In an optional implementation, the processing circuitry maps the updated RS-resource-configuration list to the measurement configuration of the serving BS-DU.

According to a 21^{st} aspect, provided in addition to any one of the eighteenth to 20^{th} aspects, the processing circuitry performs measurements based on the updated RS-resource-configuration list. In an optional implementation, the UE comprises a transmitter transmits a measurement report with results of the measurements to the serving BS-DU.

According to a 22^{nd} aspect, provided in addition to any one of the fourteenth, fifteenth, and eighteenth to 21^{st} aspects, the receiver receives a cell-switch trigger from the serving BS-DU indicating a cell of the mobility-candidate BS-DU as the target of the cell switch. The processing circuitry controls the switching from a current cell of the serving BS-DU to the indicated cell of the mobility-candidate BS-DU. In an optional implementation, the communication configuration of the mobility-candidate BS-DU further includes lower-layer configuration parameters of the BS-DU relating to facilitating communication of the UE with the cell of the mobility-candidate BS-DU. In a further optional implementation, an RS resource configuration of a BS-DU relates to one cell of said BS-DU, and another RS resource configuration of said BS-DU relates to another cell of said BS-DU.

According to a 23^{rd} aspect, a method is provided, comprising the following steps performed by a user equipment, UE:
receiving, from a distributed unit of a base station serving the UE, serving BS-DU, a communication configuration of a BS-DU being a candidate for participating in mobility of the UE, decoding the received mobility-candidate-BS-DU communication configuration to obtain a reference signal, RS, resource configuration of the mobility-candidate BS-DU relating to a candidate cell of the mobility-candidate BS-DU, and
updating a current list having information on an RS-resource configuration of at least the serving BS-DU, based on the decoded RS-resource configuration of the mobility-candidate BS-DU.

According to a 24^{th} aspect, an integrated circuit is provided which, in operation, controls a process of a user equipment, UE, the process comprising the following steps performed by the UE:
receiving, from a distributed unit of a base station serving the UE, serving BS-DU, a communication configuration of a BS-DU being a candidate for participating in mobility of the UE,
decoding the received mobility-candidate-BS-DU communication configuration to obtain a reference signal, RS, resource configuration of the mobility-candidate BS-DU relating to a candidate cell of the mobility-candidate BS-DU, and
updating a current list having information on an RS-resource configuration of at least the serving BS-DU, based on the decoded RS-resource configuration of the mobility-candidate BS-DU.

### Further Variants, including Hardware and Software Implementation of the present disclosure

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto.

The LSI here may be referred to as an IC (integrated circuit), a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT).

The communication may include exchanging data through, for example, a cellular system, a wireless LAN system, a satellite system, etc., and various combinations thereof.

The communication apparatus may comprise a device such as a controller or a sensor, which is coupled to a communication device performing a function of communication described in the present disclosure. For example, the communication apparatus may comprise a controller or a sensor that generates control signals or data signals, which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

### (Control Signals)

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### (Base Station)

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well.

### (Uplink/Downlink/Sidelink)

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### (Data Channels/Control Channels)

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### (Reference Signals)

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### (Time Intervals)

In the present disclosure, time resource units are not limited to one or a combination of slots and symbols, and may be time resource units, such as frames, superframes, subframes, slots, time slot subslots, minislots, or time resource units, such as symbols, Orthogonal Frequency Division Multiplexing (OFDM) symbols, Single Carrier-Frequency Division Multiplexing Access (SC-FDMA) symbols, or other time resource units. The number of symbols included in one slot is not limited to any number of symbols exemplified in the embodiment(s) described above, and may be other numbers of symbols.

### (Frequency Bands)

The present disclosure may be applied to any of a licensed band and an unlicensed band.

### (Communication)

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### (Antenna Ports)

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

Further, the various embodiments may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc. It should be further noted that the individual features of the different embodiments may individually or in arbitrary combination be subject matter to another embodiment.

It would be appreciated by a person skilled in the art that numerous variations and/or modifications may be made to the present disclosure as shown in the specific embodiments. The present embodiments are, therefore, to be considered in all respects to be illustrative and not restrictive.

## Claims

1. A user equipment, UE, comprising:
a transmitter, which in operation, transmits a mobility request to a distributed unit of the base station, mobility-candidate BS-DU, being a candidate for participating in mobility for a user equipment, UE,
a receiver, which in operation, receives, from the mobility-candidate BS-DU, a reference signal, RS, resource configuration of the mobility-candidate BS-DU relating to a candidate cell of the mobility-candidate BS-DU,
processing circuitry, which in operation, generates an updated list, the updated RS-resource-configuration list having information on the received RS-resource configuration of the mobility-candidate BS-DU and on a RS-resource configuration of at least a serving BS-DU serving the UE, and
the transmitter, which in operation, transmits content of the updated RS-resource configuration list to the serving BS-DU for further forwarding to the UE.

2. The BS-CU according to claim 1, wherein
the transmitter, in operation, transmits the updated RS-resource-configuration list to the serving BS-DU of the UE,
the receiver, in operation, receives, from the serving BS-DU, an updated communication configuration of the serving BS-DU, wherein the updated serving-BS-DU communication configuration has the content of the updated RS-resource-configuration list mapped to a measurement configuration of the serving BS-DU, and
wherein the transmitting of the content on the updated RS-resource-configuration list involves forwarding the updated serving-BS-DU communication configuration to the serving BS-DU.

3. The BS-CU according to claim 2, wherein
the mobility request or another message, transmitted to the mobility-candidate BS-DU, includes the list having information on the RS resource configuration of at least the serving-BS-DU,
the receiver, in operation, receives, from the mobility-candidate BS-DU, a communication configuration of the mobility-candidate BS-DU,
the transmitter, in operation, forwards the received mobility-candidate-BS-DU communication configuration to the serving BS-DU for further forwarding to the UE, and
optionally wherein the mobility-candidate BS-DU communication configuration has content of an RS-resource-configuration list mapped to a measurement configuration of the mobility-candidate BS-DU, wherein the mapped RS-resource-configuration list content includes the RS resource configuration of the serving-BS-DU and of the mobility-candidate BS-DU.

4. The BS-CU according to claim 1, wherein
the receiver, in operation, receives, from the mobility-candidate BS-DU, a communication configuration of the mobility-candidate BS-DU, in response to the mobility request,
the transmitter, in operation, forwards the received mobility-candidate-BS-DU communication configuration to the serving BS-DU for further forwarding to the UE, and
wherein the mobility-candidate-BS-DU communication configuration does not include an RS resource configuration of the mobility-candidate BS-DU,
optionally wherein the mobility-candidate BS-DU communication configuration includes a pointer to the updated RS-resource-configuration list, transmitted to the serving BS-DU, so as to map the updated RS-resource-configuration list to a measurement configuration of the mobility-candidate BS-DU included in the mobility-candidate-BS-DU communication configuration.

5. The BS-CU according to claim 4, wherein
the transmitter, in operation, transmits another mobility request to another BS-DU for being a candidate for participating in mobility for the UE,
the receiver, in operation, receives, from the other mobility-candidate BS-DU, an RS resource configuration of the other mobility-candidate BS-DU relating to a candidate cell of the other mobility-candidate BS-DU, in response to the other mobility request,
the processing circuitry, in operation, updates a current RS-resource-configuration list, based on the received RS resource configuration of the other mobility-candidate BS-DU,
the transmitter, in operation, transmits the updated RS-resource-configuration list to the serving BS-DU for further forwarding to the UE,
optionally wherein the receiver, in operation, receives a communication configuration of the other mobility-candidate BS-DU, in response to the other mobility request, and wherein the transmitter, forwards the received communication configuration of the other mobility-candidate BS-DU to the serving BS-DU for further forwarding to the UE, wherein the communication configuration of the other mobility-candidate BS-DU does not include an RS resource configuration of the other mobility candidate BS-DU.

6. A distributed unit of a base station, BS-DU, comprising:
a receiver, which in operation, receives, from a central unit of the base station, a mobility request for participating in mobility for a user equipment, UE, wherein the mobility request, or another message received by the receiver, includes a list having information on the RS resource configuration of at least a BS-DU serving the UE, wherein the serving-BS-DU RS-resource configuration relates to a candidate cell of the serving BS-DU,
a processing circuitry, which in operation, updates the received RS-resource-configuration list with an RS resource configuration of the BS-DU relating to a candidate cell of the BS-DU, and
a transmitter, which in operation, transmits the RS-resource-configuration of the BS-DU or alternatively the updated RS-resource-configuration list to the BS-CU.

7. The BS-DU according to claim 6, wherein the receiver, in operation, receives, from the BS-CU, a modification request, including an updated list of RS resource configurations having an RS resource configuration of another mobility-candidate BS-DU further to the RS resource configuration of the serving BS-DU and of the BS-DU,
the processing circuitry, in operation, generates an updated communication configuration of the BS-DU, based on the updated RS-resource-configuration list received from the BS-CU in the modification request,
the transmitter, in operation, transmits the generated updated BS-DU communication configuration to the BS-CU.

8. A distributed unit of a base station, BS-DU, comprising:
a receiver, which in operation, receives, from a central unit of the base station, a mobility request for participating in mobility for a user equipment, UE,
a processing circuitry, which in operation, generates a communication configuration of the BS-DU, wherein the BS-DU communication configuration does not include a reference signal, RS, resource configuration of the BS-DU, and
a transmitter, which in operation, transmits the BS-DU communication configuration to the BS-CU.

9. The BS-DU according to claim 8, wherein the BS-DU communication configuration includes a pointer to a current list of one or more RS resource configurations usable to map the current RS-resource-configuration list to a measurement configuration of the BS-DU included in the BS-DU communication configuration.

10. A user equipment, UE, including:
a processing circuitry, which in operation, has access to a communication configuration of a base station serving the UE, serving BS-DU, wherein the serving-BS-DU communication configuration includes a measurement configuration of the serving BS-DU that does not include a reference-signal, RS, resource configuration of the serving BS-DU,
the processing circuitry, which in operation, has access to a list of one or more RS resource configurations, including the RS resource configuration of at least the serving BS-DU, the RS resource configuration relating to a candidate cell of the serving BS-DU,
a receiver, which in operation, receives, from the serving BS-DU, an updated list of one or more RS resource configurations, the updated RS-resource-configuration list including the RS resource configuration of the serving BS-DU and of a BS-DU being a candidate for participating in mobility for the UE, and
the processing circuitry, which in operation, uses the updated RS-resource-configuration list together with the measurement configuration of the serving BS-DU.

11. The UE according to claim 10, wherein the measurement configuration of the serving BS-DU includes a pointer to the updated RS-resource-configuration list,
optionally wherein the receiver, when in operation, receives, from the serving BS-DU, a communication configuration of the mobility-candidate BS-DU,
optionally wherein the processing circuitry, in operation, performs measurements based on the updated RS-resource-configuration list and the measurement configuration of the serving BS-DU, and
optionally wherein the UE comprises a transmitter, which in operation, transmits a measurement report with results of the measurements to the serving BS-DU.

12. A method comprising the following steps performed by a user equipment, UE:
accessing a communication configuration of a base station serving the UE, serving BS-DU, wherein the serving-BS-DU communication configuration includes a measurement configuration of the serving BS-DU that does not include a reference-signal, RS, resource configuration of the serving BS-DU,
accessing a list of one or more RS resource configurations, including the RS resource configuration of at least the serving BS-DU, the RS resource configuration relating to a candidate cell of the serving BS-DU,
receiving, from the serving BS-DU, an updated list of one or more RS resource configurations, the updated RS-resource-configuration list including the RS resource configuration of the serving BS-DU and of a BS-DU being a candidate for participating in mobility for the UE, and
using the updated RS-resource-configuration list together with the measurement configuration of the serving BS-DU.

13. A user equipment, UE, comprising:
a receiver, which in operation, receives, from a distributed unit of a base station serving the UE, serving BS-DU, a communication configuration of a BS-DU being a candidate for participating in mobility of the UE,
processing circuity, which in operation, decodes the received mobility-candidate-BS-DU communication configuration to obtain a reference signal, RS, resource configuration of the mobility-candidate BS-DU relating to a candidate cell of the mobility-candidate BS-DU, and
the processing circuitry, which in operation, updates a current list having information on an RS-resource configuration of at least the serving BS-DU, based on the decoded RS-resource configuration of the mobility-candidate BS-DU.

14. The UE according to claim 13, wherein the processing circuitry, in operation, maps the updated RS-resource-configuration list to a measurement configuration of the serving BS-DU, and
optionally wherein the mapping includes ignoring a current RS-resource configuration list and instead using the updated RS-resource-configuration list in connection with the serving-BS-DU measurement configuration.

15. A method comprising the following steps performed by a user equipment, UE:
receiving, from a distributed unit of a base station serving the UE, serving BS-DU, a communication configuration of a BS-DU being a candidate for participating in mobility of the UE, decoding the received mobility-candidate-BS-DU communication configuration to obtain a reference signal, RS, resource configuration of the mobility-candidate BS-DU relating to a candidate cell of the mobility-candidate BS-DU, and
updating a current list having information on an RS-resource configuration of at least the serving BS-DU, based on the decoded RS-resource configuration of the mobility-candidate BS-DU.
